# EUROPÄISCHE PATENTSCHRIFT

(11) **EP 3 571 087 B1**
(45) Veröffentlichungstag und Bekanntmachung des Hinweises auf die Patenterteilung: **07.06.2023**
(21) Anmeldenummer: 17791638.4
(22) Anmeldetag: 17.10.2017
(51) Int. Cl.: B60L 53/16, B60L 58/10, B60L 3/00, B60L 3/04, B60L 53/30

(54) **BATTERIESYSTEM FÜR EIN FAHRZEUG**
BATTERY SYSTEM FOR A VEHICLE
SYSTÈME DE BATTERIE POUR VÉHICULE

(30) Priorität: 17.01.2017 DE 102017100771
(43) Veröffentlichungstag der Anmeldung: 27.11.2019
(73) Patentinhaber: INTILION GmbH, 08056 Zwickau (DE)
(72) Erfinder: WINKLER, Norman, 08056 Zwickau (DE); REINHOLD, Stefan, 08058 Zwickau (DE); NAWRATH, Thomas, 08056 Zwickau (DE)
(74) Vertreter: Bals & Vogel Patentanwälte PartGmbB
(86) Internationale Anmeldenummer: PCT/EP2017/076512
(87) Internationale Veröffentlichungsnummer: WO 2018/133960

(56) Entgegenhaltungen:
- EP-A1- 2 371 610
- EP-A1- 2 799 275
- DE-A1-102010 029 833
- DE-A1-102012 110 524
- US-A1- 2011 201 223

## Beschreibung

Die vorliegende Erfindung betrifft ein Batteriesystem für ein Fahrzeug. Ferner bezieht sich die Erfindung auf ein Ladesystem sowie ein Verfahren.

Aus EP2799275A1 ist ein gattungsgemäßes Batteriesystem für ein Fahrzeug mit einer Sicherheitsunterbrechung der Energieversorgung einer Fahrzeugkomponente bekannnt. Aus DE102007028386A1 ist ein elektrisches Flurfahrzeug bekannt mit einem durch ein Öffnungsmittel freigebbaren Ladeanschluss, welches Öffnungsmittel nach einer Öffnungsbetätigung die Inbetriebnahme des Fahrzeugs blockiert.

Aus US7022943B1 ist ein Fahrzeug mit einer elektrischen Energieversorgungsschnittstelle bekannt, die einen Steckverbinder eines eingesteckten Stromkabels mechanisch detektiert und die Zündung des Fahrzeuges blockiert, solange der Steckverbinder in die Energieversorgungsschnittstelle eingesteckt ist.

Aus dem Stand der Technik ist des Weiteren bekannt, dass Fahrzeuge, insbesondere Flurförderzeuge wie Gabelstapler, elektrisch betrieben und/oder angetrieben werden. Zur Energieversorgung einer Fahrzeugkomponente, bspw. eines Elektromotors, kommen dabei wiederaufladbare Batterien als Energiequelle zum Einsatz. Die wiederaufladbare Batterie (Akkumulator) des Fahrzeuges ist dabei bspw. als Lithiumbatterie (insbesondere Lithium-Ionen-Batterie) ausgeführt, um auch bei kurzzeitigen Zwischenladungen einen langen Betrieb des Fahrzeuges ermöglichen zu können. Bereits kurze Zwischenladungen können dabei oft den Betrieb (d. h. die Nutzungsdauer) des Fahrzeuges um Stunden verlängern.

Aus diesem Grunde werden in der Praxis Zwischenladungen der Batterie immer populärer, um bspw. das Fahrzeug kurzfristig in Betrieb nehmen zu können und die Nutzungsdauer zu verlängern. Daher ist es oft gewünscht, dass eine Kontaktierung des Fahrzeuges bzw. der Batterie an ein Ladegerät einfach und/oder schnell und/oder ergonomisch gestaltet wird. Herkömmlicherweise wird hierzu die Batterie über dieselben Verbindungspunkte sowohl mit dem Fahrzeug (bspw. dem Fahrzeugbordnetz) als auch mit dem Ladegerät verbunden.

Dabei kann es möglich sein, dass sowohl das Fahrzeug (d. h. ein Fahrzeugbordnetz bzw. die Fahrzeugkomponente) als auch ein Ladestecker des Ladegeräts elektrisch mit der Batterie kontaktiert. Entsprechend kann das Fahrzeug während des Ladevorgangs betriebsbereit sein, da die Energieversorgung durch die Batterie aufrecht erhalten bleibt. Hierbei muss allerdings vermieden werden, dass bei einer unachtsamen Handhabung, bspw. bei einem Losfahren mit dem Fahrzeug, das noch kontaktierte Ladegerät und/oder das Fahrzeug beschädigt wird.

Um dies zu verhindern, müssen technisch aufwendige und komplexe Maßnahmen getroffen werden. So kann bspw. vorgesehen sein, dass zunächst manuell die Verbindung der Batterie zur Fahrzeugkomponente (bzw. Fahrzeugbordnetz) getrennt wird und erst im Anschluss daran das Ladegerät zum Aufladen kontaktiert wird. Dies ist allerdings wenig ergonomisch und zeitaufwendig. Die Dauer für eine Zwischenladung wird damit drastisch erhöht.

Es ist daher eine Aufgabe der vorliegenden Erfindung, die voranstehend beschriebenen Nachteile zumindest teilweise zu beheben. Insbesondere ist es eine Aufgabe der vorliegenden Erfindung, eine sicherere und/oder schnellere und/oder ergonomischere Möglichkeit zur Aufladung der Batterie bereitzustellen.

Die voranstehende Aufgabe wird gelöst durch ein Batteriesystem mit den Merkmalen des unabhängigen Systemanspruchs 1, ein Ladesystem mit den Merkmalen des weiteren nebengeordneten Systemanspruchs sowie durch ein Verfahren mit den Merkmalen des unabhängigen Verfahrensanspruchs. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Batteriesystem beschrieben sind, selbstverständlich auch im Zusammenhang mit dem erfindungsgemäßen Ladesystem sowie dem erfindungsgemäßen Verfahren, und jeweils umgekehrt, so dass bzgl. der Offenbarung zu den einzelnen Erfindungsaspekten stets wechselseitig Bezug genommen wird bzw. werden kann.

Die Aufgabe wird insbesondere gelöst durch ein Batteriesystem für ein Fahrzeug gemäß dem unabhängigen Vorrichtungsanspruch 1, vorzugsweise für ein Flurförderzeug, neben den weiteren Merkmalen des Anspruchs 1 aufweisend:
- wenigstens eine wiederaufladbare Batterie, insbesondere Lithium-Ionen Batterie, zur (elektrischen) Energieversorgung wenigstens einer Fahrzeugkomponente des Fahrzeuges,
- eine Ladekomponente zur mechanischen und elektrischen Ladeverbindung mit einer externen Ladevorrichtung, um in einem Ladezustand (des Batteriesystems) die Batterie durch die Ladevorrichtung aufzuladen, vorzugsweise durch eine Herstellung einer elektrischen Verbindung und/oder elektrischen Energieübertragung zwischen der Ladevorrichtung und der Batterie,
- eine Sicherheitsvorrichtung, welche zumindest teilweise (räumlich) im Bereich der Ladekomponente angeordnet ist, um die mechanische Ladeverbindung der Ladekomponente mit der Ladevorrichtung zu detektieren, vorzugsweise sodass eine Sicherheitsunterbrechung der Energieversorgung der Fahrzeugkomponente im Ladezustand durchführbar ist, bevorzugt dadurch dass eine elektrische Verbindung zwischen der Fahrzeugkomponente und der Batterie zumindest teilweise unterbrochen wird und/oder ein Stromfluss zwischen der Batterie und der Fahrzeugkomponente zumindest teilweise unterbunden wird und/oder ein Hauptstrom zum Fahrzeug zumindest teilweise unterbrochen wird.

Dies hat den Vorteil, dass bereits bei Detektion der mechanischen Ladeverbindung zwischen der Ladekomponente und der Ladevorrichtung die Energieversorgung der Fahrzeugkomponente verhindert wird, insbesondere ein Hauptstrom des Fahrzeuges unterbrochen wird. Eine solche mechanische Ladeverbindung ist bspw. ein Formschluss eines Ladesteckers der Ladevorrichtung mit einer Ladebuchse der Ladekomponente.

Es kann somit auch ein Problem zumindest reduziert werden, welches auftritt, wenn lediglich die elektrische Ladeverbindung detektiert wird. Um eine elektrische Ladeverbindung zu detektieren, kann bspw. eine elektrisch leitende Brücke (bzw. eine Umschaltkomponente) im Ladestecker (Ladegerätestecker) vorgesehen sein, welche beim Einstecken mit Leitern des Batteriesystems kontaktiert und somit einen Stromkreis schließt. Dies kann dann als elektrische Ladeverbindung detektiert werden. Hierdurch kann ferner die Unterbrechung der Energieversorgung ausgelöst werden. Allerdings kann es problematisch sein, wenn ein Defekt der Brücke vorliegt und/oder die mechanische Ladeverbindung (wie eine mechanische Verriegelung des Steckergehäuses mit dem Buchengehäuse) vor der elektrischen Ladeverbindung hergestellt wird. In diesem Fall ist die Ladevorrichtung bzw. der Ladestecker mit der Ladekomponente verbunden, was allerdings nicht zuverlässig detektiert werden kann. Ein weiteres Problem ist, dass stets eine solche Umschaltkomponente im Ladestecker vorgesehen sein muss, was zu zusätzlichen Kosten und Aufwand führt, sowie ggf. Bauraum reduziert. Bei dem erfindungsgemäßen Batteriesystem kann hingegen vorgesehen sein, dass die mechanische Ladeverbindung erkannt wird, um die Sicherheitsunterbrechung durchzuführen. Entsprechend kann die erfindungsgemäße Lösung Kosten und technischen Aufwand reduzieren sowie die Sicherheit erhöhen.

Vorzugsweise wird dabei unter einer mechanischen Ladeverbindung eine physikalische und/oder nicht-elektrische Kontaktierung der Ladevorrichtung, insbesondere eines Gehäuses eines Ladesteckers der Ladevorrichtung, mit der Ladekomponente, insbesondere mit einem Gehäuse einer Ladebuchse der Ladekomponente, verstanden. Bevorzugt ist dabei die Ladeverbindung eine kraft- und/oder formschlüssige und/oder lösbare Verbindung zwischen der Ladevorrichtung und der Ladekomponente. Bspw. können hierzu wenigstens ein elastisches und/oder federndes (Gehäuse-) element und/oder wenigstens ein Rastmittel wenigstens eines der Gehäuse zum Einsatz kommen, um einen solchen Form- und/oder Kraftschluss herzustellen. Wenigstens eines der Gehäuse und/oder der Elemente und/oder der Rastmittel können dabei ggf. aus einem Kunststoff hergestellt sein. Dies ermöglicht eine einfache und sichere Kontaktierung der Ladevorrichtung zum Aufladen der Batterie.

Von weiterem Vorteil kann vorgesehen sein, dass die Ladekomponente komplementär zur Ladevorrichtung ausgebildet ist, um die mechanische Ladeverbindung als eine lösbare kraft-und/oder formschlüssige Verbindung herzustellen. Bspw. kann hierzu die Ladekomponente eine Ladebuchse aufweisen, welche komplementär zu einem Ladestecker (Stecker) der Ladevorrichtung (bspw. eines Ladegeräts) ausgebildet ist. In anderen Worten kann die Ladebuchse hinsichtlich der Geometrie und/oder des Durchmessers einer Öffnung der Ladebuchse und/oder der Länge dazu ausgeführt sein, einen Ladestecker aufzunehmen. Durch diese Aufnahme kann dann die mechanische Ladeverbindung hergestellt werden. Zur form- und/oder kraftschlüssigen Verbindung ist bspw. wenigstens ein Rastmittel bei der Ladekomponente und/oder der Ladevorrichtung vorgesehen, welche(s) bei der Aufnahme (also z. B. dem Einführen des Steckers) einen Formschluss und/oder Kraftschluss herstellt. Somit wird eine sichere und zuverlässige mechanische Verbindung gewährleistet. Gleichzeitig kann durch die Kontaktierung von elektrischen Anschlüssen der Ladekomponente und der Ladevorrichtung miteinander die elektrische Ladeverbindung hergestellt werden.

Vorzugsweise kann die Sicherheitsvorrichtung ein Betätigungselement aufweisen, welches derart angrenzend zur Ladekomponente, insbesondere einer Ladebuchse, angeordnet ist, dass vor und/oder bei der Herstellung der (insbesondere mechanischen) Ladeverbindung eine Kraftausübung durch die Ladevorrichtung, insbesondere einem Ladestecker, vorzugsweise eines Gehäuseteils des Ladesteckers auf das Betätigungselement erfolgt, sodass durch das Betätigungselement die Detektion durchführbar ist. Bspw. kann das Betätigungselement hierbei beweglich ausgeführt sein und/oder beweglich und/oder schwenkbar an einem Gehäuse der Sicherheitsvorrichtung und/oder der Ladekomponente gelagert sein. Vorzugsweise ist das Betätigungselement als Wippe ausgebildet. Dies hat den Vorteil, dass eine einfache und zuverlässige Detektion der mechanischen Ladeverbindung erfolgen kann. Insbesondere erfolgt dabei die Betätigung des Betätigungselements ausschließlich mechanisch (und damit nicht elektrisch wie bei der Umschaltkomponente).

Vorzugsweise ist das Ladekomponentengehäuse, insbesondere ein Gehäuseteil, welches eine Ladebuchse trägt, derart geformt, dass ein Sicherheitspfad der Sicherheitsvorrichtung geöffnet wird, bevor oder wenn ein Formschluss zwischen dem Ladestecker und der Ladebuche hergestellt ist. Bevorzugt ist hierzu ein Betätigungselement am Gehäuseteil vorgesehen, um die Bewegung in den Formschluss zu erfassen. Bspw. erfolgt hierzu eine Anordnung des Betätigungselements derart am Gehäuseteil, dass dieses in einen Verbindungsbereich (z. B. vor Rastmitteln oder dergleichen zum Formschluss) angeordnet ist, um die Bewegung in den Formschluss zu erfassen. Damit kann der gefahrbringende Formschluss bereits erkannt werden, wenn sich der Ladestecker der endgültigen Position in der Ladebuchse nähert. Es wird dabei der (eingeleitete) Formschluss erkannt und nicht der elektrische Kontakt (also die elektrische Ladeverbindung), was die Sicherheit deutlich erhöhen kann. Auch ein fehlerhafter elektrischer Kontakt führt damit nicht zu einem Sicherheitsrisiko.

Optional kann es möglich sein, dass ausschließlich die mechanische Ladeverbindung, und damit nicht die elektrische Ladeverbindung, detektiert wird. Dies hat den Vorteil, dass der technische Aufwand sowie die Kosten für die Detektion, insbesondere für eine elektrische Umschaltkomponente, reduziert werden können.

Vorzugsweise ist die Ladekomponente an einem Batteriegehäuse angeordnet, bevorzugt fest und/oder unbeweglich am Batteriegehäuse befestigt, und insbesondere die Sicherheitsvorrichtung zumindest teilweise zwischen der Ladekomponente und dem Batteriegehäuse angeordnet, vorzugsweise befestigt. Hierdurch kann insbesondere der notwendige Bauraum reduziert werden.

Optional kann bei dem erfindungsgemäßen Batteriesystem vorgesehen sein, dass die Ladevorrichtung extern und/oder separat und/oder räumlich beabstandet von der Ladekomponente ausgeführt und/oder angeordnet ist, und bevorzugt nicht Teil des erfindungsgemäßen Batteriesystems ist. Damit wird der Vorteil erzielt, dass auch unterschiedliche Ladevorrichtungen als Ladegerät zum Einsatz kommen können.

Erfindungsgemäß ist es vorgesehen, dass ein (insbesondere rein) mechanisches Betätigungselement der Sicherheitsvorrichtung unmittelbar oder benachbart an einem Gehäuse der Ladekomponente angeordnet ist, nämlich in einem Verbindungsbereich, in welchem die Ladevorrichtung, insbesondere ein Ladestecker, zur Ladeverbindung mit der Ladekomponente, insbesondere einer Ladebuchse, durch eine Kontaktierungsbewegung einbringbar ist, sodass das Betätigungselement durch die Kontaktierungsbewegung der Ladevorrichtung betätigbar, insbesondere bewegbar, ausgeführt ist. Entsprechend kann es möglich sein, dass bei dem Einbringen der Ladevorrichtung bzw. des Ladesteckers in die Ladekomponente bzw. die Ladebuchse eine Kraftausübung auf das Betätigungselement durch die Ladevorrichtung bzw. den Ladestecker erfolgt, da bspw. das Betätigungselement in dem Verbindungsbereich angeordnet ist, in welchem bei vollständiger mechanischer Ladeverbindung sich die Ladevorrichtung bzw. der Ladestecker erstreckt. Dies hat den Vorteil, dass eine einfache und kostengünstige Detektion möglich ist, welche aufgrund der Erfassung der räumlichen Präsenz der Ladevorrichtung im Verbindungsbereich besonders zuverlässig die mechanische Ladeverbindung erkennt.

Es ist im Rahmen der Erfindung vorgesehen, dass ein mechanisches Betätigungselement der Sicherheitsvorrichtung derart in dem Verbindungsbereich der Ladekomponente angeordnet ist, dass eine Kraftausübung durch die Ladevorrichtung im Zuge einer Herstellung der mechanischen Ladeverbindung zeitlich vor einer Kontaktierung wenigstens eines elektrischen Kontakts der Ladevorrichtung mit einem jeweiligen Gegenkontakt der Ladekomponente erfolgt. Die Kontaktierung, d. h. die elektrische Verbindung des elektrischen Kontakts mit dem Gegenkontakt, dient dabei bspw. zur Energieübertragung von der Ladevorrichtung zur Batterie. Bspw. ist hier die Ladevorrichtung als ein Ladegerät ausgeführt, welches ein Ladeverfahren zur Aufladung der Batterie durchführt. Somit ist eine zuverlässige Aufladung möglich.

Von weiterem Vorteil kann vorgesehen sein, dass ein elektrisches Schaltmittel der Sicherheitsvorrichtung vorgesehen ist, und insbesondere in einen elektrischen Sicherheitspfad des Batteriesystems integriert ist, vorzugsweise über den Sicherheitspfad mit einem Batteriemanagementsystem verbindbar ist, um zur Detektion der mechanischen Ladeverbindung den Sicherheitspfad zu unterbrechen. Bspw. ist das Batteriemanagementsystem mit dem Sicherheitspfad elektrisch über wenigstens zwei elektrische Leitungen verbunden, welche somit mit dem Schaltmittel einen Stromkreis bilden. Bei einer Unterbrechung durch das Schaltmittel kann daher ein Stromfluss durch den Stromkreis unterbunden werden. insbesondere kann diese Unterbrechung durch das Batteriemanagementsystem zur Detektion der mechanischen Ladeverbindung ermittelt werden, bspw. durch eine Auswerte- und/oder Verarbeitungsvorrichtung (insbesondere als eine Überwachungs- und/oder Betriebsvorrichtung) des Batteriemanagementsystems. Besonders bevorzugt ist dabei das Schaltmittel als Taster ausgeführt, welcher durch das Betätigungselement betätigt wird. Somit kann zuverlässig die Detektion erfolgen. insbesondere bietet es dabei einen Vorteil, wenn das Schaltmittel den Sicherheitspfad zur Detektion unterbricht, und somit vorzugsweise als Öffner ausgeführt ist. Damit kann gewährleistet werden, dass auch im Fehlerfall (bei unterbrochenem Strom) die Energieversorgung der Fahrzeugkomponente unterbunden wird.

Des Weiteren kann vorgesehen sein, dass
- in einem Normalzustand (des Batteriesystems) das Schaltmittel den Sicherheitspfad schließt, sodass ein Stromfluss durch den Sicherheitspfad erfolgt, um eine mechanisch mit der Ladevorrichtung unverbundene Ladekomponente zu detektieren, und
- im Ladezustand (des Batteriesystems) das Schaltmittel den Sicherheitspfad öffnet, sodass der Stromfluss vollständig oder im Wesentlichen verhindert ist, um eine mechanisch mit der Ladevorrichtung verbundene Ladekomponente zu detektieren.

Bspw. kann hierbei im Normalzustand die Energieversorgung zur Fahrzeugkomponente hergestellt sein, und im Ladezustand unterbunden sein. Bspw. erfolgt eine Auswertung des Stromflusses durch eine Verarbeitungsvorrichtung (insbesondere als eine Überwachungs-und/oder Betriebsvorrichtung) des Batteriemanagementsystems. Insbesondere hat dies den Vorteil, dass bei einem fehlerhaft unterbrochenen Stromfluss das Batteriesystem in einen sicheren Zustand überführt wird.

Nach einer weiteren Möglichkeit kann vorgesehen sein, dass ein Betätigungselement, insbesondere eine mechanische Wippe, benachbart zu einem Schaltmittel angeordnet ist, und vorzugsweise beweglich an einem Gehäuse der Sicherheitsvorrichtung und/oder an einem Gehäuse der Ladekomponente gelagert ist, um insbesondere bei einer Kraftausübung auf das Betätigungselement das Schaltmittel durch eine zumindest teilweise lineare oder Dreh- oder Kipp- oder Schwenkbewegung des Betätigungselements zu betätigen. Damit kann die mechanische Bewegung aufgrund der Herstellung der mechanischen Ladeverbindung genutzt werden, um ein elektrisches Signal zu erzeugen (hier insbesondere: Unterbrechung des Stromflusses). Insbesondere kann ein Batteriemanagementsystem dieses Signal erfassen, um die mechanische Ladeverbindung zu detektieren, und bei positiver Detektion die Energieversorgung der Fahrzeugkomponente zu unterbrechen. Bspw. ist dabei das Schaltmittel als elektronischer oder mechanischer Schalter, insbesondere Taster, bspw. als Transistor, ausgeführt, um den Stromfluss zu unterbinden. Insbesondere ist das Betätigungselement federbelastet ausgeführt, z. B. durch ein Federelement, um im Normalzustand bei unverbundener Ladeverbindung das Schaltmittel nicht zu betätigen bzw. zu schließen.

Weiter ist im Rahmen der Erfindung denkbar, dass wenigstens ein elektronisches Schaltelement zur Herstellung einer elektrischen Verbindung der Batterie mit der Fahrzeugkomponente vorgesehen ist, und ein Steuerungspfad, insbesondere eines Batteriemanagementsystems, elektrisch mit dem elektronischen Schaltelement verbunden ist, sodass bei der Detektion der mechanischen Ladeverbindung das elektronische Schaltelement über den Steuerungspfad in einen ausgeschalteten Schaltzustand bringbar ist, um die elektrische Verbindung der Batterie mit der Fahrzeugkomponente zumindest teilweise zu unterbrechen. Hierdurch kann zuverlässig die Energieversorgung der Fahrzeugkomponente bei Detektion der mechanischen Ladeverbindung unterbrochen werden, also die Sicherheitsunterbrechung initiiert werden. Bspw. ist hierbei das Schaltelement wie das Schaltmittel als elektronischer Schalter ausgeführt. Insbesondere ist dabei eine Verarbeitungsvorrichtung (vorzugsweise als eine Überwachungs- und/oder Betriebsvorrichtung) vorgesehen, um die Ansteuerung des Schaltelements über den Steuerungspfad durchzuführen.

Des Weiteren kann vorgesehen sein, dass ein Batteriemanagementsystem vorgesehen ist, welches vorzugsweise elektrisch mit wenigstens einem Schaltelement über wenigstens einen oder jeweilige Steuerungspfade verbunden ist, sodass in Abhängigkeit von der Detektion der mechanischen Ladeverbindung:
- für einen Aufladevorgang (im Ladezustand) bei positiver Detektion ein erstes elektronisches Schaltelement in einen eingeschalteten ersten Schaltzustand und ein zweites elektronisches Schaltelement in einen ausgeschalteten zweiten Schaltzustand bringbar ist, und/oder
- für eine bereitgestellte Energieversorgung zur Fahrzeugkomponente bei negativer Detektion (im Normalzustand) das erste elektronische Schaltelement in einen eingeschalteten ersten Schaltzustand und das zweite elektronische Schaltelement in einen eingeschalteten zweiten Schaltzustand bringbar ist.

Ferner ist es denkbar, dass die Fahrzeugkomponente als elektrische Antriebskomponente, insbesondere als Elektromotor, des Fahrzeuges ausgeführt ist.

Es kann möglich sein, dass beim erfindungsgemäßen Batteriesystem vorgesehen ist:
- wenigstens zwei (elektrische und/oder elektronische) Schaltelemente jeweils zur Herstellung und/oder Unterbrechung einer elektrischen Verbindung der Batterie mit der Fahrzeugkomponente, insbesondere zur Herstellung und/oder Unterbrechung der Energieversorgung der Fahrzeugkomponente.

Des Weiteren ist denkbar, dass ein Ladeverbindungspunkt vorgesehen ist, welcher elektrisch unabhängig von den (elektronischen) Schaltelementen elektrisch (ggf. fest und/oder unlösbar) mit der Batterie verbunden ist, und insbesondere zur (ggf. lösbaren) elektrischen Verbindung mit einer (externen) Ladevorrichtung ausgeführt ist, sodass vorzugsweise eine Aufladung der Batterie durch die Ladevorrichtung unabhängig von einem Schaltzustand und/oder bei einem ausgeschalteten Schaltzustand wenigstens (oder genau) eines der (elektronischen) Schaltelemente durchführbar ist. Damit wird der Vorteil erzielt, dass auch bei einer Aufladung die Energieversorgung zu der Fahrzeugkomponente unterbrochen werden kann, und damit die Sicherheitsunterbrechung der Energieversorgung der Fahrzeugkomponente bereitgestellt werden kann.

Bevorzugt ist dabei die Ladevorrichtung als eine externe Ladevorrichtung ausgeführt, d. h. außerhalb des Batteriesystems und/oder des Fahrzeuges vorgesehen.

Insbesondere bezieht sich ein ausgeschalteter Schaltzustand auf einen gesperrten bzw. geöffneten Schaltzustand zum Sperren eines Stromflusses zumindest in eine Stromrichtung durch das entsprechende Schaltelement, wohingegen insbesondere ein eingeschalteter Schaltzustand sich auf einen freigegebenen bzw. geschlossenen Schaltzustand bezieht zur Freigabe des Stromflusses bezieht.

Vorzugsweise dient der ausgeschaltete Schaltzustand der Schaltelemente dazu, die jeweilige elektrische Verbindung zu unterbrechen, insbesondere einen elektrischen Stromfluss durch die jeweilige Verbindung zumindest überwiegend zu reduzieren, sodass die vollständige Energieversorgung der Fahrzeugkomponente unterbrochen werden kann. Die Energieversorgung wird dabei insbesondere dadurch unterbrochen, dass eine Energieübertragung über die Verbindung gesperrt wird.

Insbesondere ergibt sich ein Vorteil dadurch, dass der Ladeverbindungspunkt elektrisch unabhängig von den (elektronischen) Schaltelementen elektrisch mit der Batterie verbunden ist. Dies ermöglicht es, dass wenigstens einer der elektronischen Schaltelemente für das Aufladen in einen ausgeschalteten (d. h. geöffneten und/oder gesperrten) Schaltzustand überführt werden kann (d. h. in einen Sperrzustand gebracht wird), sodass insbesondere eine elektrische Verbindung der Fahrzeugkomponente mit der Batterie durch das Schaltelement gesperrt wird. In anderen Worten wird damit die Sicherheitsunterbrechung der Energieversorgung der Fahrzeugkomponente durchgeführt. Damit wird verhindert, dass eine Energieübertragung von der Batterie zur Fahrzeugkomponente vollständig erfolgt, und das Fahrzeug kann somit nicht fortbewegt bzw. betrieben werden. Mit anderen Worten kann trotz des angesteckten Ladegeräts (d. h. bspw. der Ladevorrichtung bzw. des Ladesteckers) und/oder trotz des Ladevorgangs die Energiezufuhr bzw. Energieversorgung zur Fahrzeugkomponente (d. h. zum Fahrzeug) unterbunden werden. Auf diese Weise kann ein effizienter Wegfahrschutz bereitgestellt werden. Dieser kann zudem technisch einfach und kostengünstig realisiert werden, da insbesondere keine weiteren Anpassungen am Fahrzeug notwendig sind. Insbesondere kann der Wegfahrschutz ausschließlich durch das Batteriesystem bereitgestellt sein.

Gemäß einer vorteilhaften Weiterbildung der Erfindung kann vorgesehen sein, dass wenigstens (oder genau) ein erstes und zweites (elektronisches) Schaltelement vorgesehen sind, wobei vorzugsweise
- das erste (elektronische) Schaltelement in einen ersten Strompfad integriert ist, und in einen eingeschalteten ersten Schaltzustand bringbar ist, sodass eine erste elektrische Verbindung der Batterie mit der Fahrzeugkomponente und/oder mit der Ladevorrichtung im ersten Strompfad herstellbar ist,
- das zweite (elektronische) Schaltelement in einen zweiten Strompfad integriert ist, und in einen eingeschalteten zweiten Schaltzustand bringbar ist, sodass eine zweite elektrische Verbindung der Batterie mit der Fahrzeugkomponente im zweiten Strompfad herstellbar ist,
wobei bevorzugt der Ladeverbindungspunkt zur elektrischen Verbindung der Batterie mit der Ladevorrichtung unabhängig von dem zweiten Schaltzustand des zweiten elektronischen Schaltelements ausgeführt ist. Somit ist über den Ladeverbindungspunkt ggf. eine zweite elektrische Verbindung der Batterie mit der Ladevorrichtung möglich, wobei insbesondere zum Aufladen über die Ladevorrichtung zwei elektrische Verbindungen aktiv sein müssen (die erste und zweite elektrische Verbindung) und/oder zum Betreiben der Fahrzeugkomponente ebenfalls zwei elektrische Verbindungen (über den ersten und zweiten Strompfad) aktiv sein müssen. Dies hat den Vorteil, dass eine sicherere Möglichkeit zur Aufladung bereitgestellt werden kann, indem die Fortbewegung des Fahrzeuges unterbunden werden kann.

Es kann dabei insbesondere möglich sein, dass die Aufladung der Batterie durch die Ladevorrichtung bei einem ausgeschalteten Schaltzustand (und/oder unabhängig von einem Schaltzustand) wenigstens oder genau eines der elektronischen Schaltelemente, insbesondere des zweiten elektronischen Schaltelements, durchführbar ist und/oder durchgeführt wird. Insbesondere umfasst dabei das Batteriesystem ein erstes elektronisches Schaltelement in einem ersten Strompfad (ggf. Pluszweig der Batterie) und ein zweites elektronisches Schaltelement in einem zweiten Strompfad (ggf. Minuszweig der Batterie). Vorzugsweise sind dabei die beiden Schaltelemente (bezogen auf die zu sperrende Stromrichtung) antiparallel in die Strompfade integriert, sodass insbesondere zwei unterschiedliche Stromrichtungen durch die Schaltelemente gesperrt werden können (z. B. von der Batterie in Richtung Fahrzeugkomponente und umgekehrt). Insbesondere kann zur Kontaktierung der Batterie mit dem Fahrzeug (d. h. mit der Fahrzeugkomponente) ein zweiter Verbindungspunkt und ein dritter Verbindungspunkt dienen. Der dritte Verbindungspunkt ist dabei bspw. mit dem ersten elektronischen Schaltelement und der zweite Verbindungspunkt mit dem zweiten elektronischen Schaltelement (ggf. direkt bzw. unmittelbar) verbunden.

Grundsätzlich könnten dabei der zweite und dritte Verbindungspunkt auch zur Verbindung mit dem Ladegerät dienen. Dies hat allerdings den Nachteil, dass dann zum Aufladen beide Schaltelemente geschlossen bleiben müssen, sodass auch die Fahrzeugkomponente weiter mit Energie durch die Batterie versorgt wird. Es kann daher ein erster Verbindungspunkt (Ladeverbindungspunkt) vorgesehen sein, welcher unabhängig von dem (ersten oder zweiten) Schaltzustand des (ersten oder zweiten) elektronischen Schaltelements elektrisch mit der Batterie verbunden ist. Dies ermöglicht es, dass bspw. durch das Umschalten des zweiten elektronischen Schaltelements in den ausgeschalteten (zweiten) Schaltzustand die Energieübertragung der Batterie zur Fahrzeugkomponente gesperrt werden kann, und dennoch das Ladegerät über den ersten Verbindungspunkt mit der Batterie zum Aufladen verbunden werden kann. Am ersten Verbindungspunkt kann entsprechend ein Abgriff und/oder Kontakt zum Verbinden mit dem Ladegerät (bzw. dem Ladestecker) vorgesehen sein und/oder konstruktiv bereitgestellt werden. Insbesondere wird dieser Abgriff bzw. der erste Verbindungspunkt ausschließlich zur Kontaktierung mit dem Ladegerät verwendet. Insbesondere wird dabei der Umstand genutzt, dass die jeweiligen Schaltelemente als Halbleiter(schalter) nur in eine Stromrichtung den Stromfluss sperren. Bevorzugt ist dabei der erste Verbindungspunkt direkt mit der Masse (wenigstens) einer der Batteriezellen der Batterie verbunden.

Insbesondere können die Verbindungspunkte (insbesondere auch der Ladeverbindungspunkt) dabei Positionen und/oder (bspw. gleiche bzw. gemeinsame) elektrische Potentiale an/bei einem elektrischen Leiter betreffen, und bevorzugt auch elektrische Anschlüsse oder dergleichen am Leiter umfassen. Allerdings muss der Verbindungspunkt nicht zwangsläufig ein Element sein, welches sich konstruktiv vom übrigen Leiter hervorhebt. Somit kann wenigstens einer der Verbindungspunkte (im weiteren Sinne) sich auch lediglich auf eine Positionsangabe im Schaltkreis beziehen. Im engeren Sinne weist wenigstens einer der Verbindungspunkte dagegen bereits Anpassungen auf, welche eine Kontaktierung ermöglichen, wie ein Kopplungselement (bspw. einen Steckverbinder oder eine Aufnahme für einen Steckverbinder oder dergleichen).

Insbesondere müssen zur Bereitstellung der Energieversorgung von der Batterie an die Fahrzeugkomponente nach dem Aufladen wieder beide Schaltelemente derart (in einen eingeschalteten bzw. geschlossenen Schaltzustand) angesteuert werden, dass beide Schaltelemente den Stromfluss ermöglichen. Auch kann es möglich sein, dass im Normalbetrieb das Batteriemanagementsystem die jeweiligen Schaltelemente unterschiedlich ansteuert, bspw. auch im ausgeschalteten Schaltzustand, um diverse Managementfunktionen durchzuführen. Eine solche Managementfunktion ist bspw. eine Stromflusssteuerung. Um zuverlässig und vollständig beide Stromflussrichtungen zu sperren, müssen dabei bspw. beide antiparallel geschaltete Schaltelemente in den ausgeschalteten Schaltzustand überführt werden.

Es ist weiter denkbar, dass beim Kontaktieren des Ladesteckers bzw. des Ladegeräts, insbesondere durch wenigstens eine Umschaltkomponente, wenigstens ein (elektrisches) Signal erzeugt wird, welches ein Umschalten des zweiten elektronischen Schaltelements in den ausgeschalteten (zweiten) Schaltzustand bewirkt (und damit ein Sperren des Stromflusses in zumindest eine Stromrichtung durch das zweite elektronische Schaltelement). Damit kann die Fahrzeugkomponente nicht mehr durch die Batterie (ausreichend) mit Energie versorgt werden, sodass ein Losfahren zuverlässig verhindert wird.

Insbesondere ist die Umschaltkomponente als eine passive und/oder elektromechanische Komponente, insbesondere Elektronikkomponente, zur Detektion der elektrischen Ladeverbindung ausgeführt. Bspw. ist die Umschaltkomponente als Hilfskontakt und/oder Brücke ausgeführt, welcher beim Kontaktieren des Ladesteckers ein elektrisches Steuersignal an das Batteriemanagementsystem sendet und/oder dieses bewirkt. So kann es bspw. vorgesehen sein, dass der Hilfskontakt beim Kontaktieren zwei Signalleitungen brückt, um das Steuersignal zu erzeugen. Das Steuersignal kann dann bspw. von einer (ggf. passiven) Schaltung (bspw. des Batteriemanagementsystems) ausgelesen werden, woraufhin bei positiver Detektion des Steuersignals das zweite elektronische Schaltelement zwangsweise in einen ausgeschalteten (zweiten) Schaltzustand überführt werden kann. Insbesondere kann dabei die Schaltung des Batteriesystems derart ausgelegt sein, dass das Steuersignal durch andere Komponenten nicht übersteuert werden kann. Alternativ oder zusätzlich ist es denkbar, dass die Umschaltkomponente eine weitere Funktion erfüllt, wie bspw. eine erfolgreiche elektrische Kontaktierung für die Ladevorrichtung indiziert. Ggf. erfüllt die Umschaltkomponente ausschließlich eine Funktionalität für die Ladevorrichtung, und wird daher nicht für das Batteriesystem bzw. durch das Batteriemanagementsystem genutzt. Dies ermöglicht einen besonders zuverlässigen Betrieb dadurch, dass sowohl eine elektrische Kontaktierung (die elektrische Ladeverbindung, welche insbesondere durch die Umschaltkomponente detektiert wird) als auch eine mechanische Kontaktierung (mechanische Ladeverbindung) detektiert werden kann.

Bevorzugt ist die Umschaltkomponente elektrisch leitfähig und/oder flächenförmig und/oder stiftförmig ausgeführt, und insbesondere fest mit dem Ladestecker verbunden. Bevorzugt kontaktiert dabei beim Kontaktieren des Ladesteckers die Umschaltkomponente einen entsprechenden Gegenkontakt des Batteriesystems.

Vorzugsweise ist dabei die Fahrzeugkomponente als ein Bordnetz oder ein Antrieb oder Teil eines Antriebs oder als ein Elektromotor oder dergleichen des Fahrzeuges ausgeführt. Insbesondere dient die Fahrzeugkomponente zum Antrieb, d. h. zur Fortbewegung, des Fahrzeuges. Mit anderen Worten kann es möglich sein, dass durch eine Energieversorgung der Fahrzeugkomponente bzw. durch ein Bereitstellen von Energie von der Batterie für die Fahrzeugkomponente eine Fortbewegung des Fahrzeuges ermöglicht wird. Dabei hat eine Unterbrechung dieser Energieversorgung bei einem Ladevorgang den Vorteil, dass die Fortbewegung verhindert wird und somit die Gefahr für eine Beschädigung der Ladevorrichtung reduzierbar ist.

Insbesondere ist dabei das Fahrzeug als ein Elektrofahrzeug und/oder als ein Flurförderzeug (Flurfördergerät) und/oder als ein Kraftfahrzeug ausgeführt. Bspw. ist das Flurförderzeug als ein Fördermittel ausgeführt, das seiner Bauart nach mit Rädern auf Flur laufen und frei lenkbar und/oder zum Befördern, Ziehen und/oder Schieben von Lasten eingerichtet und/oder zur innerbetrieblichen Verwendung bestimmt ist. Weiter ist es denkbar, dass das Flurförderzeug zum Heben, Stapeln und/oder In-Regale-Einlagern von Lasten ausgeführt ist und/oder Lasten selbst aufnehmen und absetzen kann. Es kann sich dabei bspw. um ein Elektro-Geh-Gerät oder Elektro-Stand-Gerät oder Elektro-Fahrersitz-Gerät handeln.

Das Batteriesystem umfasst wenigstens eine wiederaufladbare Batterie, welche bevorzugt (jeweils) eine oder mehrere Batteriezellen (insbesondere galvanische Zellen) aufweist. Bspw. können die Batteriezellen, ggf. als Batteriemodul oder Zellstack oder dergleichen, miteinander verbunden und/oder zusammengefasst sein. Des Weiteren kann es vorgesehen sein, dass das Batteriesystem wenigstens ein Batteriemanagementsystem umfasst, das bspw. mit der Batterie (und/oder einem oder mehreren Batteriezellen und/oder Batteriemodulen und/oder Zellstacks) elektrisch verbunden oder dieser zugeordnet ist. Insbesondere dient dabei das Batteriemanagementsystem zur Steuerung und/oder Überwachung eines Entladevorgangs der Batterie (bzw. der Batteriezellen) und/oder zur Steuerung und/oder Überwachung eines Ladevorgangs der Batterie, d. h. zur Aufladung bei dem Batteriesystem, insbesondere der Batteriezellen der Batterie. Hierzu kann das Batteriemanagementsystem bspw. das erste elektronische Schaltelement und/oder das zweite elektronische Schaltelement ansteuern, insbesondere über einen Steuerungspfad des jeweiligen Schaltelements. Somit kann das Batteriemanagementsystem elektrisch mit den jeweiligen Schaltelementen verbunden sein.

Insbesondere dient dabei die Batterie zur Energieversorgung der wenigstens einen Fahrzeugkomponente des Fahrzeuges, d. h. zum Betreiben der Fahrzeugkomponente, bspw. zum Antreiben bzw. Fortbewegen des Fahrzeuges. Bspw. kann die Batterie dazu mit einem Bordnetz des Fahrzeuges elektrisch verbunden sein. Insbesondere liefert dabei die Batterie eine elektrische Spannung und/oder liegt an der Fahrzeugkomponente eine elektrische Spannung an im Bereich von 10 V bis 100 V, vorzugsweise 20 V bis 80 V, bevorzugt 40 V bis 60 V.

Bevorzugt ist die wiederaufladbare Batterie als eine Lithiumbatterie (insbesondere Lithium-Ionen-Batterie) ausgeführt. Eine solche Lithiumbatterie bietet dabei den Vorteil, mit hoher Laderate wieder aufgeladen werden zu können. So kann die Batterie bspw. innerhalb maximal einer Stunde vollständig aufgeladen werden, und/oder es können Zwischenladungen mit einer Dauer von höchstens einigen Minuten durchgeführt werden um die Nutzungsdauer um Stunden zu verlängern. Insbesondere bei der Verwendung mit Flurförderzeugen kann somit der Vorteil erzielt werden, dass sogenannte Zwischenlagerungen durchgeführt werden, um das Flurförderzeug kurzfristig betreiben zu können.

Nach einer weiteren Möglichkeit kann vorgesehen sein, dass ein, insbesondere zweiter, Steuerungspfad, insbesondere eines Batteriemanagementsystems, elektrisch mit wenigstens einem der elektronischen Schaltelemente (insbesondere mit dem zweiten elektronischen Schaltelement) verbunden ist, sodass bei der Verbindung mit der Ladevorrichtung das wenigstens eine der elektronischen Schaltelemente über den Steuerungspfad in einen ausgeschalteten (zweiten) Schaltzustand bringbar ist, um insbesondere die (zweite) elektrische Verbindung der Batterie mit der Fahrzeugkomponente zumindest teilweise zu unterbrechen. Dies ermöglicht eine automatische Unterbindung der Energieversorgung der Batterie zur Fahrzeugkomponente, sodass bereits beim Kontaktieren des Ladegeräts (d. h. der Ladevorrichtung) eine Wegfahrsperre bereitgestellt werden kann. Dadurch kann die Sicherheit beim Aufladen weiter erhöht werden.

Insbesondere wird dabei in Bezug auf die elektronischen Schaltelemente unter einer (ggf. zumindest teilweisen oder vollständigen) Unterbrechung einer elektrischen Verbindung und/oder eines Stromflusses auch ein Sperren des Stromflusses verstanden, bei der nur noch ein sehr geringer Stromfluss erfolgt (wie dies im Sperrzustand bei Halterleiterschaltern technisch unvermeidbar ist). Mit anderen Worten wird im ausgeschalteten Schaltzustand der Stromfluss überwiegend reduziert, sodass effektiv keine Energieversorgung zum Betrieb der Fahrzeugkomponente möglich ist.

Bevorzugt kann im Rahmen der Erfindung vorgesehen sein, dass der erste Strompfad als positiver Strompfad ausgeführt ist, welcher elektrisch mit einem Pluspol der Batterie verbunden ist, und der zweite Strompfad als negativer Strompfad ausgeführt ist, welcher elektrisch mit einem Minuspol der Batterie verbunden ist. Insbesondere ist dabei der erste Verbindungspunkt direkt und/oder unmittelbar mit dem Minuspol der Batterie (d. h. insbesondere mit wenigstens einer Masse wenigstens einer Batteriezelle) elektrisch verbunden. Somit kann die Aufladung zuverlässig und sicher erfolgen.

Optional kann es vorgesehen sein, dass ein Batteriemanagementsystem vorgesehen ist, welches elektrisch mit den Schaltelementen über jeweilige Steuerungspfade verbunden ist, sodass vorzugsweise
- für einen Aufladevorgang ein erstes elektronisches Schaltelement in einen eingeschalteten ersten Schaltzustand und ein zweites elektronisches Schaltelement in einen ausgeschalteten zweiten Schaltzustand bringbar ist, und/oder
- für eine vollständig bereitgestellte Energieversorgung zur Fahrzeugkomponente das erste elektronische Schaltelement in einen eingeschalteten ersten Schaltzustand und das zweite elektronische Schaltelement in einen eingeschalteten zweiten Schaltzustand bringbar ist, und/oder
- für eine vollständige Unterbrechung und/oder beidpolig unterbrochene Energieversorgung zur Fahrzeugkomponente das erste elektronische Schaltelement in einen ausgeschalteten ersten Schaltzustand und das zweite elektronische Schaltelement in einen ausgeschalteten zweiten Schaltzustand bringbar ist, sodass vorzugsweise sowohl die Energieversorgung als auch eine Aufladung verhindert ist.

Dabei kann es auch möglich sein, dass es neben der vollständig bereitgestellten bzw. vollständig unterbrochenen Energieversorgung noch weitere Energieversorgungszustände gibt, welche sich durch unterschiedliche Schaltzustände der Schaltelemente ergeben. Diese können bspw. durch das Batteriemanagementsystem gesteuert werden, um verschiedene Managementfunktionen für das Batteriesystem bereitzustellen (bspw. eine Stromflusskontrolle und dergleichen). Damit ist ein flexibler und anpassbarer Betrieb des Batteriesystems möglich.

Vorteilhaft ist es darüber hinaus, wenn im Rahmen der Erfindung eines der elektronischen Schaltelemente und der Ladeverbindungspunkt (erste Verbindungspunkt) jeweils direkt mit der Batterie, insbesondere mit einem Minuspol der Batterie, elektrisch verbunden sind. Damit kann über den Ladeverbindungspunkt unabhängig vom Schaltelement eine elektrische Verbindung mit der Batterie hergestellt werden, um so den Aufladevorgang sicherer und zuverlässiger durchzuführen.

Gemäß einer vorteilhaften Weiterbildung der Erfindung kann vorgesehen sein, dass die elektronischen Schaltelemente antiparallel zueinander (d. h. insbesondere in unterschiedlichen Stromrichtungen sperrend bzw. in Bezug auf die Sperrrichtung gegenläufig) in einem Schaltkreis zur Energieversorgung der Fahrzeugkomponente integriert sind, wobei vorzugsweise die elektronischen Schaltelemente jeweils als Halbleiterschalter, vorzugsweise als Leistungs-Halbleiterschalter, insbesondere als Feldeffekttransistor, ausgeführt sind. Damit ergeben sich eine Vielzahl an möglichen Managementfunktionen, welche den Stromfluss bei dem Batteriesystem modifizieren können. Alternativ oder zusätzlich kann vorgesehen sein, dass die elektronischen Schaltelemente dazu ausgeführt sind, im jeweils ausgeschalteten (d. h. gesperrten) Schaltzustand jeweils nur in einer Stromrichtung einen Stromfluss (der Batterie bzw. Energieversorgung) zu sperren.

Es kann von Vorteil sein, wenn im Rahmen der Erfindung das Batteriesystem zur Energieversorgung der Fahrzeugkomponente als elektrische Antriebskomponente, insbesondere als Elektromotor, des Fahrzeuges ausgeführt ist. Damit dient die Fahrzeugkomponente zur Fortbewegung des Fahrzeuges. Insbesondere ist es zum Betrieb der Fahrzeugkomponente, d. h. zum Fortbewegen des Fahrzeuges, notwendig, dass eine Energieversorgung durch die Batterie für die Fahrzeugkomponente bereitgestellt wird. Es kann hierbei vorgesehen sein, dass bei einer Aufladung der Batterie diese Energieversorgung verhindert wird, um die Sicherheit beim Betrieb des Fahrzeuges in der Aufladephase zu erhöhen.

Es kann optional möglich sein, dass der Ladeverbindungspunkt als ein erster Verbindungspunkt ausgeführt ist, wobei ein zweiter Verbindungspunkt zur Verbindung der Fahrzeugkomponente mit der Batterie über ein zweites elektronisches Schaltelement und ein dritter Verbindungspunkt zur Verbindung der Fahrzeugkomponente mit der Batterie über ein erstes elektronisches Schaltelement vorgesehen ist, wobei der erste Verbindungspunkt im Strompfad zwischen dem zweiten elektronischen Schaltelement und der Batterie integriert ist, sodass vorzugsweise unabhängig von einem zweiten Schaltzustand des zweiten elektronischen Schaltelements und/oder auch bei einem ausgeschalteten zweiten Schaltzustand eine elektrische Verbindung zwischen dem ersten Verbindungspunkt und der Batterie besteht. Insbesondere kann dabei der dritte Verbindungspunkt ebenfalls als weiterer Verbindungspunkt zum Aufladen mit der Ladevorrichtung vorgesehen sein, wobei der Ladeverbindungspunkt (erster Verbindungspunkt) und der dritte Verbindungspunkt mit unterschiedlichen Anschlüssen bzw. Polen des Ladegeräts verbunden werden. Damit kann die Aufladung konstruktiv einfach und sicher erfolgen.

Ebenfalls Gegenstand der Erfindung ist ein Ladesystem zur Aufladung wenigstens einer Batterie eines Batteriesystems eines Fahrzeuges, vorzugsweise eines Flurförderzeuges. Hierbei ist vorgesehen, dass das Ladesystem folgendes aufweist:
- eine Batterie zur Energieversorgung wenigstens einer Fahrzeugkomponente des Fahrzeuges,
- wenigstens eine separat von dem Batteriesystem ausgeführte Ladevorrichtung zur Energieübertragung an die Batterie,
- eine Ladekomponente des Batteriesystems zur lösbaren mechanischen und elektrischen Ladeverbindung mit der Ladevorrichtung, um die Energieübertragung zu bewirken,
- eine Sicherheitsvorrichtung, welche zumindest teilweise im Bereich der Ladekomponente angeordnet ist, um die mechanische Ladeverbindung zu detektieren, sodass eine Sicherheitsunterbrechung der Energieversorgung der Fahrzeugkomponente durchführbar ist, wobei ein mechanisches Betätigungselement der Sicherheitsvorrichtung unmittelbar oder benachbart an einem Gehäuse der Ladekomponente angeordnet ist, nämlich in einem Verbindungsbereich (V), in welchem die Ladevorrichtung zur Ladeverbindung mit der Ladekomponente durch eine Kontaktierungsbewegung (B) einbringbar ist, sodass das Betätigungselement durch die Kontaktierungsbewegung (B) der Ladevorrichtung betätigbar ausgeführt ist, und wobei das mechanische Betätigungselement derart in dem Verbindungsbereich (V) der Ladekomponente angeordnet ist, dass eine Kraftausübung durch die Ladevorrichtung im Zuge einer Herstellung der mechanischen Ladeverbindung zeitlich vor einer Kontaktierung wenigstens eines elektrischen

Kontakts der Ladevorrichtung mit einem jeweiligen Gegenkontakt der Ladekomponente erfolgt.

Damit bringt das erfindungsgemäße Ladesystem die gleichen Vorteile mit sich, wie sie ausführlich mit Bezug auf ein erfindungsgemäßes Batteriesystem beschrieben worden sind. Hierbei ist insbesondere denkbar, dass ein Ladeverbindungspunkt des Batteriesystems vorgesehen ist, welcher elektrisch unabhängig von den elektronischen Schaltelementen elektrisch mit der Batterie verbunden ist, und vorzugsweise zur lösbaren elektrischen Verbindung mit der Ladevorrichtung ausgeführt ist, sodass die Energieübertragung durch die Ladevorrichtung auch bei einem ausgeschalteten Schaltzustand und/oder unabhängig von einem Schaltzustand wenigstens eines der elektronischen Schaltelemente durchführbar ist. Von weiterem Vorteil kann vorgesehen sein, dass die Ladevorrichtung einen Ladestecker aufweist, wobei vorzugsweise wenigstens ein erster Anschluss des Ladesteckers zur Aufladung der Batterie mit wenigstens dem Ladeverbindungspunkt elektrisch und/oder lösbar verbunden ist und/oder verbindbar ist, und wenigstens ein zweiter Anschluss des

Ladesteckers zur Aufladung der Batterie mit wenigstens einem weiteren (insbesondere einem dritten) Verbindungspunkt elektrisch und/oder lösbar verbunden ist und/ode verbindbar ist. Dies ermöglicht es, einfach und zuverlässig die Aufladung durchzuführen.

Des Weiteren kann vorgesehen sein, dass die Ladevorrichtung, vorzugsweise ein Ladestecker der Ladevorrichtung, wenigstens eine elektrische Umschaltkomponente, insbesondere eine passive und/oder elektromechanische Komponente, aufweist, welche bevorzugt dazu ausgeführt ist, bei elektrischer Kontaktierung mit dem Batteriesystem, insbesondere mit einem Anschluss eines Batteriemanagementsystems, eine Umschaltung wenigstens einer der elektronischen Schaltelemente in einen ausgeschalteten Schaltzustand zu initiieren, sodass vorzugsweise bei der Kontaktierung des Ladesteckers zur Durchführung der Aufladung die Energieversorgung (der Batterie) zur Fahrzeugkomponente, insbesondere ein Antrieb des Fahrzeuges, verhindert ist. Damit kann die sichere Trennung der Batterie von der Fahrzeugkomponente beim Kontaktieren der Ladevorrichtung mit dem Batteriesystem gewährleistet werden. Alternativ ist es denkbar, dass die Umschaltkomponente nicht die Umschaltung des wenigstens einen elektronischen Schaltelements initiiert, sondern lediglich zur Auswertung und/oder Bereitstellung einer weiteren Funktion, bspw. durch die Ladevorrichtung, dient.

Ebenfalls Gegenstand der Erfindung ist ein Verfahren zum Betrieb des erfindungsgemäßen Batteriesystems oder des erfindungsgemäßen Ladesystems, zur Aufladung bei einem Batteriesystem eines Fahrzeuges, vorzugsweise eines Flurförderzeuges, mit wenigstens einer wiederaufladbaren Batterie des Batteriesystems zur Energieversorgung wenigstens einer Fahrzeugkomponente des Fahrzeuges, und vorzugsweise wenigstens zwei elektronischen Schaltelementen des Batteriesystems jeweils zur Herstellung einer elektrischen Verbindung der Batterie mit der Fahrzeugkomponente.

Erfindungsgemäß werden dabei die nachfolgenden Schritte ausgeführt, wobei bevorzugt die Schritte nacheinander oder in beliebiger Reihenfolge durchgeführt werden, und besonders bevorzugt auch einzelne Schritte wiederholt ausgeführt werden können:
- Verbinden einer (externen) Ladevorrichtung mit einer Ladekomponente des Batteriesystems, um eine mechanische und elektrische Ladeverbindung herzustellen,
- Initiieren eines Ausschaltens wenigstens eines der elektronischen Schaltelemente in einen ausgeschalteten Schaltzustand, wenn (insbesondere ausschließlich) die mechanische Ladeverbindung (insbesondere zwischen Gehäuseteilen der Ladevorrichtung und der Ladekomponente) detektiert wird, sodass die Energieversorgung der Fahrzeugkomponente überwiegend reduziert und/oder vollständig unterbrochen wird,
- Initiieren eines Aufladevorgangs zur Aufladung der Batterie durch die Ladevorrichtung.

Damit bringt das erfindungsgemäße Verfahren die gleichen Vorteile mit sich, wie sie ausführlich mit Bezug auf ein erfindungsgemäßes Batteriesystem und/oder erfindungsgemäßes Ladesystem beschrieben worden sind.

Vorteilhafterweise kann im Rahmen der Erfindung vorgesehen sein, dass anhand der Detektion (der mechanischen Ladeverbindung) das Batteriesystem von einem Schlafmodus in einen Ladezustand überführt wird, wobei vorzugsweise im Schlafmodus für eine vollständige Unterbrechung (der Energieversorgung) zur Fahrzeugkomponente ein erstes elektronisches Schaltelement in einen ausgeschalteten ersten Schaltzustand und ein zweites elektronisches Schaltelement in einen ausgeschalteten zweiten Schaltzustand überführt ist. Dies hat den Vorteil, dass durch die Herstellung der mechanischen Ladeverbindung das Batteriesystem in einfacher Weise von dem Schlafmodus in den Normalzustand überführt werden kann. Der Schaltmodus (ggf. auch als Standby-Modus) ist dabei bspw. dazu vorgesehen, einen Leistungsverbrauch bei dem Batteriesystem zu reduzieren und/oder eine Tiefenentladung zu vermeiden.

Vorzugsweise ist im Rahmen des erfindungsgemäßen Verfahrens, vorzugsweise Ladeverfahrens, vorgesehen, dass das Fahrzeug als ein Flurförderzeug ausgeführt ist. Insbesondere umfasst das Fahrzeug wenigstens eine wiederaufladbare Batterie des Batteriesystems zur Energieversorgung wenigstens einer Fahrzeugkomponente des Fahrzeuges. Bevorzugt sind dabei wenigstens zwei (elektronische) Schaltelemente des Batteriesystems jeweils zur Herstellung einer elektrischen Verbindung (d. h. elektrisch leitenden bzw. zur Stromführung geeigneten Verbindung) der Batterie mit der Fahrzeugkomponente vorgesehen.

Es ist bevorzugt bei dem erfindungsgemäßen Verfahren vorgesehen, dass dass neben den vorstehend festgeschriebenen Schritten auch einer der nachfolgenden Schritte durchgeführt wird, wobei vorzugsweise die Schritte nacheinander oder in beliebiger Reihenfolge durchgeführt werden, wobei einzelne Schritte auch wiederholt durchgeführt werden können:
- Verbinden einer Ladevorrichtung mit einem Ladeverbindungspunkt des Batteriesystems, welcher elektrisch unabhängig von den elektronischen Schaltelementen elektrisch mit der Batterie verbunden ist,
- Initiieren eines Ausschaltens wenigstens eines der elektronischen Schaltelemente in einen ausgeschalteten Schaltzustand, sodass die Energieversorgung der Fahrzeugkomponente unterbrochen wird, d. h. zumindest überwiegend reduziert und/oder vollständig unterbrochen wird, d. h. insbesondere eine vollständige bzw. ausreichende Energieversorgung der Fahrzeugkomponente und/oder eine Fortbewegung des Fahrzeuges durch die Fahrzeugkomponente verhindert wird,
- Initiieren eines Aufladevorgangs zur Aufladung der Batterie durch die Ladevorrichtung.

Zudem ist es im Rahmen der Erfindung denkbar, dass das Initiieren des Ausschaltens des wenigstens einen der elektronischen Schaltelemente ausgelöst durch das Verbinden der Ladevorrichtung erfolgt, insbesondere automatisch durch eine Herstellung eines elektrischen Kontakts beim Verbinden durch wenigstens eine Umschaltkomponente eines Ladesteckers. Damit kann die Sicherheit bei der Aufladung (des Aufladevorgangs) weiter erhöht werden.

Ebenfalls unter Schutz gestellt ist ein Fahrzeug mit einem erfindungsgemäßen Batteriesystem sowie einer Fahrzeugkomponente, vorzugsweise zur Durchführung eines erfindungsgemäßen Verfahrens.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind.

Es zeigen jeweils schematisch:
- Fig. 1: eine Darstellung von Teilen eines erfindungsgemäßen Batteriesystems, bei einem offenen Zustand der mechanischen Ladeverbindung,
- Fig. 2: eine weitere Darstellung von Teilen eines erfindungsgemäßen Batteriesystems, bei einem teilweise geschlossenen Zustand der mechanischen Ladeverbindung,
- Fig. 3: eine weitere Darstellung von Teilen eines erfindungsgemäßen Batteriesystems, insbesondere einer Sicherheitsvorrichtung,
- Fig. 4: eine Darstellung eines erfindungsgemäßen Ladesystems bzw. eines erfindungsgemäßen Batteriesystems durch ein Prinzipschaltbild,
- Fig. 5: ein weiteres Prinzipschaltbild von Teilen eines erfindungsgemäßen Batteriesystems sowie eines erfindungsgemäßen Ladesystems,
- Fig. 6: ein weiteres Prinzipschaltbild eines erfindungsgemäßen Ladesystems sowie eines erfindungsgemäßen Batteriesystems,
- Fig. 7: eine Darstellung zur Visualisierung eines erfindungsgemäßen Verfahrens.

In den nachfolgenden Figuren werden für die gleichen technischen Merkmale auch von unterschiedlichen Ausführungsbeispielen die identischen Bezugszeichen verwendet.

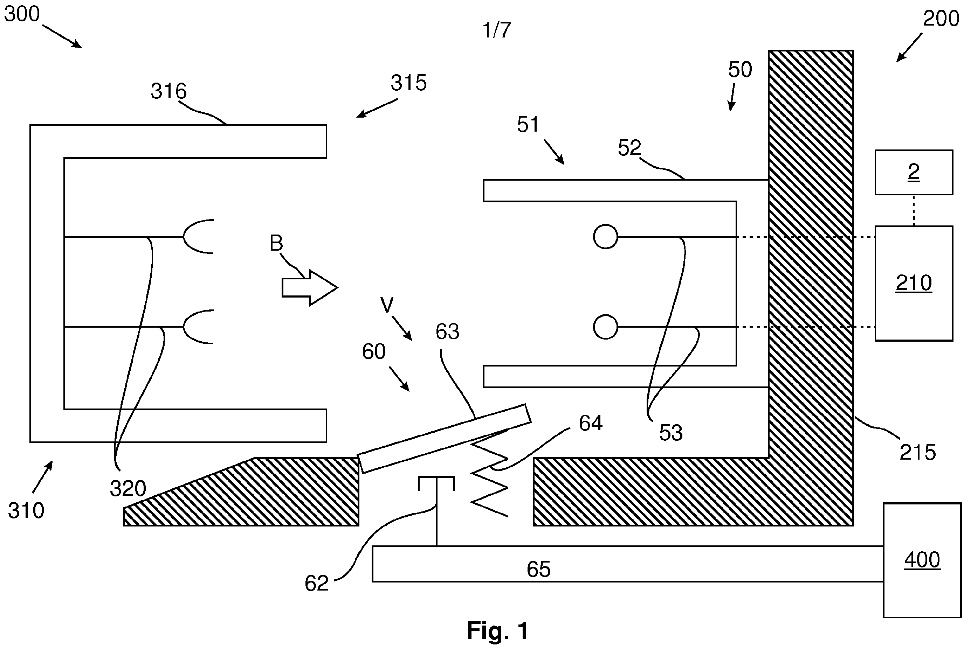

In Figur 1 ist schematisch ein erfindungsgemäßes Batteriesystem 200 bzw. ein erfindungsgemäßes Ladesystem 300 dargestellt. Das Batteriesystem 200 umfasst eine Batterie 210, welche zur Energieversorgung mit einer Fahrzeugkomponente 2 eines Fahrzeugs 1 verbindbar ist. Um eine Aufladung der Batterie 210 durchzuführen, ist es erforderlich, eine elektrische Verbindung der Batterie 210 zu einer externen Ladevorrichtung 310, d. h. insbesondere eines Ladegeräts 310, bereitzustellen. Um dies zu ermöglichen, ist eine Ladekomponente 50 vorgesehen, welche bspw. eine separate Ladebuchse 51 für einen Ladestecker 315 der Ladevorrichtung 310 aufweist. Insbesondere geht dabei die elektrische Verbindung (d. h. die elektrische Ladeverbindung) einher mit einer mechanischen Verbindung (d. h. die mechanische Ladeverbindung). Um die elektrische Ladeverbindung sicher und zuverlässig zu gewährleisten, ist es dabei ggf. sinnvoll, eine Fixierung der Ladevorrichtung 310 mit der Ladekomponente 50 durch die mechanische Ladeverbindung zu ermöglichen. Entsprechend kann die mechanische Ladeverbindung auch einen Formschluss oder dergleichen zwischen dem Ladestecker 315 und der Ladebuchse 51 nutzen.

Des Weiteren sind in Figur 1 zwei Kontakte 320 der Ladevorrichtung 310 gezeigt, welche Teil eines Ladesteckers 315 sind. Um nun die Ladeverbindung herzustellen, wird der Ladestecker 315 in Bewegungsrichtung der Kontaktierungsbewegung B in den Verbindungsbereich V bewegt, sodass der Ladestecker 315 in die Ladebuchse 51 eingebracht wird. Hierbei kommt es zunächst zur mechanischen Ladeverbindung und anschließend zur Kontaktierung der wenigstens zwei Kontakte 320 mit wenigstens zwei Gegenkontakten 53 der Ladekomponente 50, wodurch wiederum die elektrische Ladeverbindung hergestellt ist. Die mechanische Ladeverbindung ist dabei insbesondere eine mechanische form- und/oder kraftschlüssige Verbindung eines Ladekomponentengehäuses 52 mit einem Steckergehäuse 316 des Ladesteckers 315, bspw. durch nicht gezeigte Rastmittel.

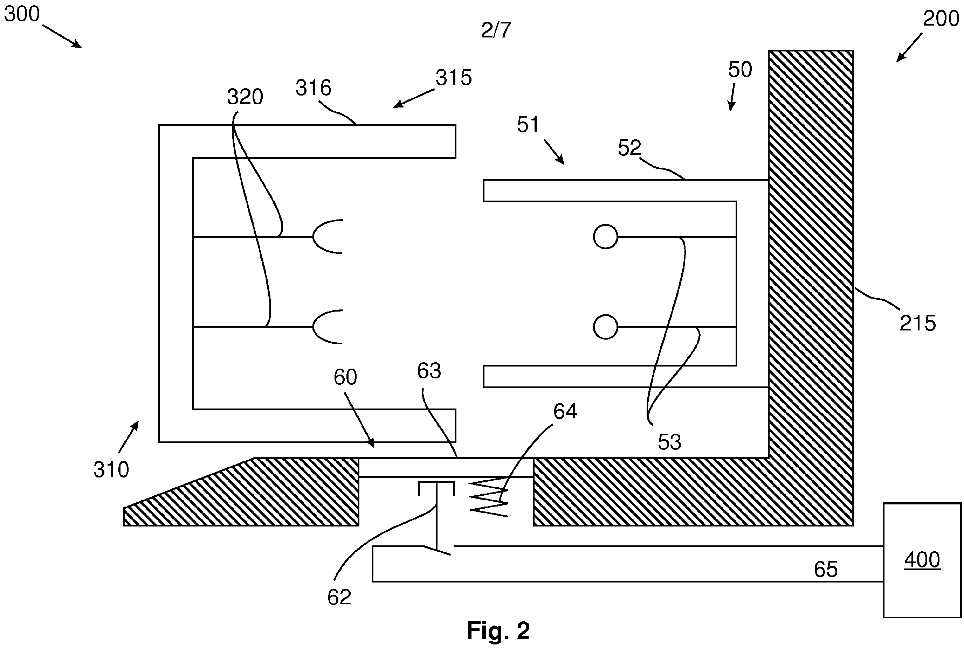

Damit eine sichere und zuverlässige Aufladung erfolgen kann, ist es sinnvoll, bei verbundener Ladevorrichtung 310 die Energieversorgung der Fahrzeugkomponente 2 zu unterbinden. Hierzu kann grundsätzlich die elektrische Ladeverbindung erfasst werden, um die Unterbrechung der Energieversorgung durchzuführen. Um eine weitergehende Sicherheit zu erzielen, ist es erfindungsgemäß vorgesehen, die mechanische Ladeverbindung zu detektieren, insbesondere einen Formschluss zu detektieren, um die Unterbrechung zu initiieren. Hierzu ist eine Sicherheitsvorrichtung 60 zumindest teilweise im Bereich der Ladekomponente 50 vorgesehen, bspw. in unmittelbarer Nähe dazu (z. B. maximal 1 mm oder maximal 5 mm oder maximal 1 cm oder maximal 4 cm von der Ladekomponente 50 entfernt angeordnet). Insbesondere ist die Sicherheitsvorrichtung 60 direkt an einem Batteriegehäuse 215 der Batterie 210 angeordnet. Vorzugsweise weist die Sicherheitsvorrichtung 60 wenigstens ein Betätigungselement 63, insbesondere eine Wippe, auf, welches sich zumindest teilweise in dem Verbindungsbereich V erstreckt. Hierdurch ist es möglich, dass bei der Bewegung der Ladevorrichtung 310, d. h. insbesondere des Ladesteckers 315, in den Verbindungsbereich V das Betätigungselement 63 betätigt wird, insbesondere bewegt wird. Dies ist in Figur 2 schematisch dargestellt. Dabei kann durch die Bewegung des Betätigungselements 63 ein Schaltmittel 62, vorzugsweise ein Öffner und/oder Taster, betätigt werden, welcher bspw. einen Sicherheitspfad 65 öffnet. Somit wird im Ladezustand (bei detektierter mechanischer Ladeverbindung) der Stromkreis des Sicherheitspfads 65 geöffnet, und somit ein Stromfluss unterbrochen, was durch ein Batteriemanagementsystem 400 festgestellt werden kann. Damit wird der Vorteil erzielt, dass das Batteriemanagementsystem 400 bei detektierter mechanischer Ladeverbindung die Energieversorgung der Ladekomponente 50 unterbrechen kann, wie nachfolgend noch näher beschrieben wird.

Insbesondere ist ferner ein Federelement 64 vorgesehen, welches mit dem Betätigungselement 63 verbunden sein kann. Dadurch kann ein federbelastetes Betätigungselement 63 bereitgestellt werden, um im Normalzustand (bei offener Ladeverbindung) den Stromkreis zu schließen.

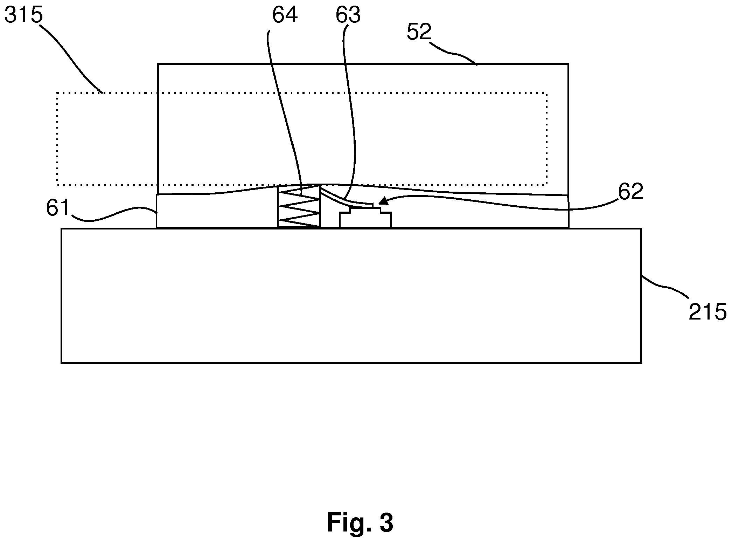

In Figur 3 ist der Aufbau der Sicherheitsvorrichtung 60 mit weiteren Einzelheiten dargestellt. Es ist ein Ladestecker 315 mit gestrichelten Linien gezeigt, um die Position des Ladesteckers 315 in der Ladebuchse 51 wiederzugeben. Des Weiteren ist die Ausbildung des Schaltmittels 62 als Taster gezeigt, welcher durch das (ggf. federbelastete) Betätigungselement 63 betätigt wird. Auch ist die Anordnung der Komponenten der Sicherheitsvorrichtung 60 im Bereich der Ladebuchse 51 zu sehen, wobei die Befestigung der gezeigten Teile der Sicherheitsvorrichtung 60 an einem Batteriegehäuse 215 bzw. an einem Gehäuse 61 der Sicherheitsvorrichtung 60 erkennbar ist.

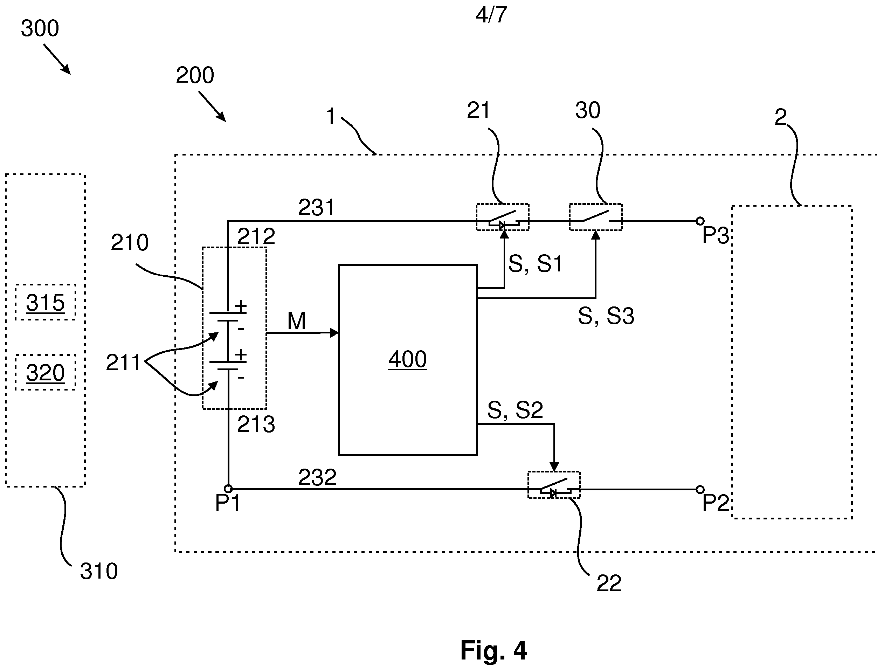

In Figur 4 ist schematisch der prinzipielle Aufbau eines erfindungsgemäßen Ladesystems 300 sowie eines erfindungsgemäßen Batteriesystems 200 gezeigt. Zum Betreiben, insbesondere zum Fortbewegen, eines Fahrzeuges 1 ist hierbei eine wiederaufladbare Batterie 210 des Fahrzeuges 1 vorgesehen. Die Batterie 210 kann dabei ein oder mehrere Batteriezellen 211 aufweisen, wie schematisch dargestellt ist. Um eine Energieversorgung wenigstens einer Fahrzeugkomponente 2 des Fahrzeuges, beispielsweise eines Elektromotors, zu ermöglichen, ist die wiederaufladbare Batterie 210 über einen zweiten und dritten Verbindungspunkt P2, P3 mit der Fahrzeugkomponente 2 verbunden. Die Fahrzeugkomponente 2 kann (z. B. neben dem Elektromotor) gegebenenfalls auch ein elektrisches Netz und/oder ein Bordnetz des Fahrzeuges 1 umfassen.

Die Energieversorgung der Fahrzeugkomponente 2 wird insbesondere dadurch ermöglicht, dass ein erster Strompfad 231 den dritten Verbindungspunkt P3 mit einem Pluspol 212 der Batterie 210 verbindet, und ein zweiter Strompfad 232 den zweiten Verbindungspunkt P2 mit einem Minuspol 213 der Batterie verbindet. Des Weiteren können in den jeweiligen Strompfaden 231, 232 elektronische Schaltelemente 20 vorgesehen sein. Die Schaltelemente 20 ermöglichen es, im ausgeschalteten Schaltzustand den Stromfluss zu sperren und im eingeschalteten Schaltzustand den Stromfluss zuzulassen. Insbesondere sind dabei die elektronischen Schaltelemente 20 als Halbleiterschalter ausgeführt, sodass bevorzugt im ausgeschalteten Schaltzustand das jeweilige Schaltelement 20 den Stromfluss nur in einer Stromrichtung sperrt. Dies ermöglicht eine komplexe und flexible Steuerung des Stromflusses, insbesondere durch ein Batteriemanagementsystem 400. Hierzu kann das Batteriemanagementsystem 400 beispielsweise über Steuerungspfade S, insbesondere über einen ersten und zweiten Steuerungspfad S1, S2, elektrisch mit den jeweiligen Schaltelementen 20 verbunden sein und/oder diese ansteuern.

Optional kann es möglich sein, dass in wenigstens einem der Strompfade, insbesondere im ersten Strompfad 231, ein weiteres Schaltelement 30 vorgesehen ist. Auch dieses kann gegebenenfalls durch das Batteriemanagementsystem 400 über wenigstens einen entsprechenden weiteren Steuerungspfad S3 angesteuert werden. Es kann dabei möglich sein, dass ein erstes elektronisches Schaltelement 21 direkt mit dem Pluspol 212 der Batterie 210 verbunden ist, und ein zweites elektronisches Schaltelement 22 direkt mit dem Minuspol 213 der Batterie 210 verbunden ist. Außerdem ist es denkbar, dass eine Messung M bzw. ein Messpfad M vorgesehen ist, welcher eine Überwachung der Batterie 210 durch das Batteriemanagementsystem 400 ermöglicht. Bevorzugt können dabei elektrische Signale über die Steuerungspfade S in Abhängigkeit von dieser Messung und/oder Überwachung ausgegeben werden, um so die jeweiligen elektronischen Schaltelemente 20 in Abhängigkeit von der Überwachung und/oder Messung anzusteuern.

Um nun die Energieversorgung für die Fahrzeugkomponente 2 vollständig herzustellen, ist es erforderlich, dass sowohl das erste elektronische Schaltelement 21 als auch das zweite elektronische Schaltelement 22 eingeschaltet werden (und damit einen Stromfluss durch die jeweiligen Strompfade 231, 232 ermöglichen).

Für ein Aufladen der Batterie 210 kann ferner das Ladesystem 300 eine Ladevorrichtung 310 aufweisen. Die Ladevorrichtung 310 umfasst beispielsweise wenigstens einen Ladestecker 315 und/oder wenigstens eine elektrische Umschaltkomponente 320 zur Detektion der elektrischen Ladeverbindung.

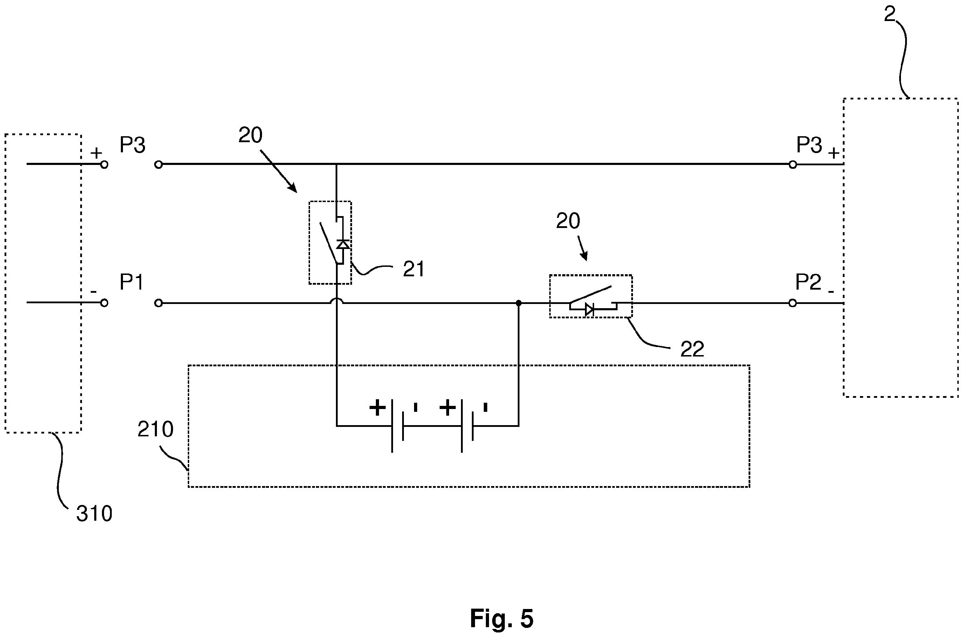

Wie in Figur 5 dargestellt ist, können dabei die Anschlüsse bzw. Pole der Ladevorrichtung 310 mit entsprechenden Verbindungspunkten P1, P3 des Batteriesystems 200 verbunden werden. Insbesondere wird dabei für einen ersten der Anschlüsse der Ladevorrichtung 310 ein Verbindungspunkt genutzt, mit welchem auch die Verbindung zur Fahrzeugkomponente 2 erfolgt (beispielsweise der dritte Verbindungspunkt P3). Darüber hinaus ist noch ein erster Verbindungspunkt P1 als Ladeverbindungspunkt vorgesehen, welcher (insbesondere ausschließlich) zur Kontaktierung eines zweiten Anschlusses der Anschlüsse der Ladevorrichtung 310 dient. Wie den Figuren 4 bis 6 zu entnehmen ist, ist dabei der erste Verbindungspunkt P1 derart im Batteriesystem 200 integriert, dass eine elektrische Verbindung zwischen der Batterie 210 und dem ersten Verbindungspunkt P1 auch bei einem ausgeschalteten (zweiten) Schaltzustand und/oder unabhängig von einem (zweiten) Schaltzustand des zweiten elektronischen Schaltelements 22 möglich ist.

Auf diese Weise kann die Sicherheit beim Aufladen der Batterie 210 erhöht werden, indem während des Aufladevorgangs (z. B. bei detektierter mechanischer und/oder elektrischer Ladeverbindung) das zweite elektronische Schaltelement 22 in einen ausgeschalteten Schaltzustand überführt wird. Dies bewirkt eine Sperrung eines Stromflusses zur Fahrzeugkomponente 2 derart, dass eine ausreichende Energieversorgung zum Betrieb der Fahrzeugkomponente 2 verhindert wird.

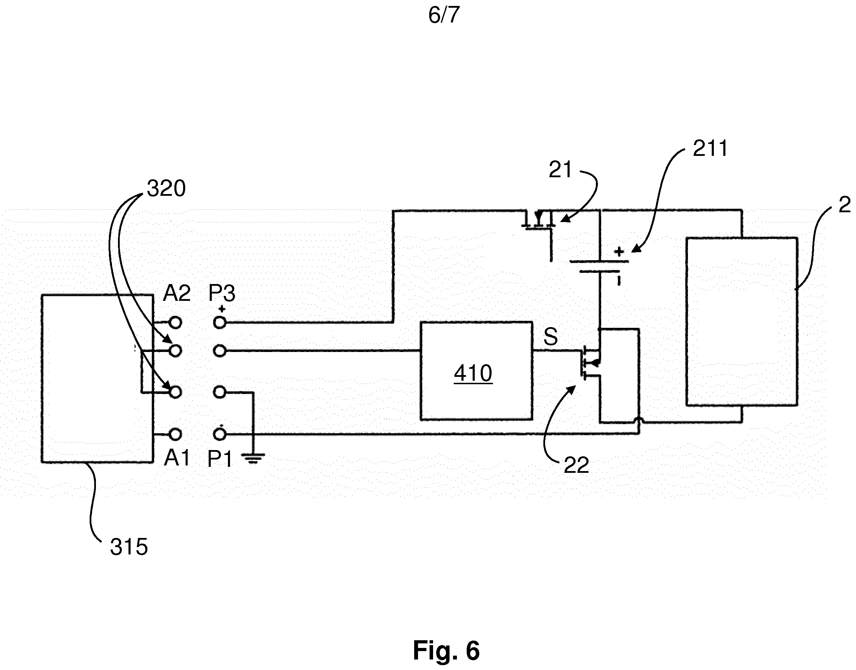

Um die Sicherheit weiter zu erhöhen, kann wenigstens eine Umschaltkomponente 320 am Ladestecker 315 vorgesehen sein. So ist in Figur 6 schematisch gezeigt, dass anhand der wenigstens einen Umschaltkomponente 320 durch eine Verarbeitungsvorrichtung, insbesondere Überwachungs- und/oder Betriebsvorrichtung 410 (beispielsweise des Batteriemanagementsystems 400) eine elektrische Kontaktierung der Ladevorrichtung 310 mit der Ladekomponente 50 des Batteriesystems 200 detektiert werden kann. Alternativ oder zusätzlich kann durch die Verarbeitungsvorrichtung 410 oder eine weitere Verarbeitungsvorrichtung 410 die mechanische Ladeverbindung detektiert werden, wie in Bezug auf Figuren 1 bis 3 erläutert wurde, bspw. durch die Überwachung eines Stromflusses durch den Sicherheitspfad 65. In Abhängigkeit von dieser Detektion kann dann beispielsweise ein Signal über wenigstens einen der Steuerungspfade S ausgegeben werden, um insbesondere das zweite elektronische Schaltelement 22 in den ausgeschalteten Schaltzustand zu überführen. Insbesondere dient dabei die wenigstens eine Umschaltkomponente 320 dazu, beim Kontaktieren zwei Signalleitungen zu brücken (wie in Figur 6 zu sehen ist). Hierzu kann die Umschaltkomponente 320 beispielsweise als elektrischer (insbesondere elektrisch leitender) Hilfskontakt, bspw. aus wenigstens einem Metall, ausgeführt sein. Insbesondere ist dabei die Umschaltkomponente 320 fest mit dem Ladestecker 315 verbunden.

Ferner ist in Figur 6 gezeigt, dass der Ladestecker 315 einen ersten Anschluss A1 und einen zweiten Anschluss A2 aufweisen kann. Beim Kontaktieren der Ladevorrichtung 310 mit dem Batteriesystem 200 kann dabei beispielsweise der erste Anschluss A1 mit dem ersten Verbindungspunkt P1 und der zweite Anschluss A2 mit dem dritten Verbindungspunkt P3 in Kontakt gebracht werden.

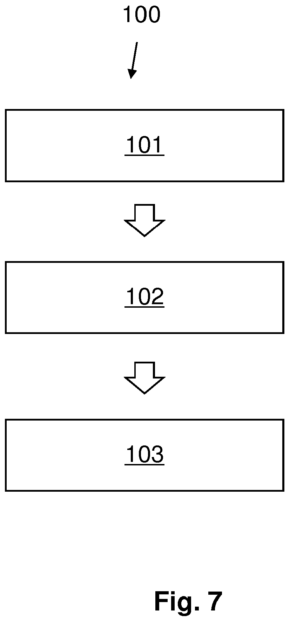

In Figur 7 ist schematisch ein erfindungsgemäßes Verfahren 100 visualisiert. Dabei erfolgt gemäß einem ersten Verfahrensschritt 101 ein Verbinden einer Ladevorrichtung 310 mit einer Ladekomponente 50 des Batteriesystems 200, um eine mechanische und elektrische Ladeverbindung herzustellen. Gemäß einem zweiten Verfahrensschritt 102 erfolgt ein Initiieren eines Ausschaltens wenigstens eines elektronischen Schaltelementes 20 in einen ausgeschalteten Schaltzustand, wenn die mechanische Ladeverbindung detektiert wird, sodass die Energieversorgung der Fahrzeugkomponente 2 überwiegend reduziert und/oder vollständig unterbrochen wird. Gemäß einem dritten Verfahrensschritt 103 erfolgt ein Initiieren eines Aufladevorgangs zur Aufladung von einer Batterie 210 durch die Ladevorrichtung 310.

Die voranstehende Erläuterung der Ausführungsformen beschreibt die vorliegende Erfindung ausschließlich im Rahmen von Beispielen.

Abweichungen von den Beispielen sind möglich, solange sie unter die beigefügten Ansprüche fallen.

### Bezugszeichenliste

- 1: Fahrzeug
- 2: Fahrzeugkomponente

- 20: elektronisches Schaltelement
- 21: erstes elektronisches Schaltelement
- 22: zweites elektronisches Schaltelement

- 30: weiteres Schaltelement

- 50: Ladekomponente
- 51: Ladebuchse
- 52: Ladekomponentengehäuse, Buchsengehäuse
- 53: Gegenkontakt

- 60: Sicherheitsvorrichtung
- 61: Gehäuse
- 62: Schaltmittel, Öffner, Taster
- 63: Betätigungselement, Wippe
- 64: Federelement
- 65: Sicherheitspfad

- 100: Verfahren
- 101: erster Verfahrensschritt
- 102: zweiter Verfahrensschritt
- 103: dritter Verfahrensschritt

- 200: Batteriesystem
- 210: Batterie
- 211: Batteriezelle
- 212: Pluspol
- 213: Minuspol
- 215: Batteriegehäuse

- 231: erster Strompfad, positiver Strompfad, Pluszweig
- 232: zweiter Strompfad, negativer Strompfad, Minuszweig

- 300: Ladesystem
- 310: Ladevorrichtung
- 315: Ladestecker
- 316: Steckergehäuse, Ladevorrichtungsgehäuse

- 320: Kontakt, Umschaltkomponente, Brücke, Steckerkontakte

- 400: Batteriemanagementsystem
- 410: Überwachungs- und/oder Betriebsvorrichtung

- A1: erster Anschluss
- A2: zweiter Anschluss
- B: Bewegungsrichtung, Kontaktierungsbewegung
- M: Messung, Messpfad
- P1: erster Verbindungspunkt, Ladeverbindungspunkt
- P2: zweiter Verbindungspunkt
- P3: dritter Verbindungspunkt
- S: Steuerungspfad
- S1: erster Steuerungspfad
- S2: zweiter Steuerungspfad
- S3: weiterer Steuerungspfad
- V: Verbindungsbereich

## Patentansprüche

1. Batteriesystem (200) für ein Fahrzeug (1), vorzugsweise für ein Flurförderzeug, aufweisend:
- wenigstens eine wiederaufladbare Batterie (210) zur Energieversorgung wenigstens einer Fahrzeugkomponente (2) des Fahrzeuges (1),
- eine Ladekomponente (50) zur mechanischen (52) und elektrischen (53) Ladeverbindung mit einer externen Ladevorrichtung (310), um in einem Ladezustand die Batterie (210) durch die Ladevorrichtung (310) aufzuladen,
- eine Sicherheitsvorrichtung (60), welche zumindest teilweise im Bereich der Ladekomponente (50) angeordnet ist, um die mechanische Ladeverbindung der Ladekomponente (50) mit der Ladevorrichtung (310) zu detektieren, sodass eine Sicherheitsunterbrechung der Energieversorgung der Fahrzeugkomponente (2) im Ladezustand durchführbar ist,
**dadurch gekennzeichnet, dass**
ein mechanisches Betätigungselement (63) der Sicherheitsvorrichtung (60) unmittelbar oder benachbart an einem Gehäuse (52) der Ladekomponente (50) angeordnet ist, nämlich in einem Verbindungsbereich (V), in welchem die Ladevorrichtung (310) zur Ladeverbindung mit der Ladekomponente (50) durch eine Kontaktierungsbewegung (B) einbringbar ist, sodass das Betätigungselement (63) durch die Kontaktierungsbewegung (B) der Ladevorrichtung (310) betätigbar ausgeführt ist, und wobei das mechanische Betätigungselement (63) derart in dem Verbindungsbereich (V) der Ladekomponente (50) angeordnet ist, dass eine Kraftausübung durch die Ladevorrichtung (310) im Zuge einer Herstellung der mechanischen Ladeverbindung zeitlich vor einer Kontaktierung wenigstens eines elektrischen Kontakts (320) der Ladevorrichtung (310) mit einem jeweiligen Gegenkontakt (53) der Ladekomponente (50) erfolgt.

2. Batteriesystem (200) nach Anspruch 1,
**dadurch gekennzeichnet,**
**dass** die Ladekomponente (50) komplementär zur Ladevorrichtung (310) ausgebildet ist, um die mechanische Ladeverbindung als eine lösbare kraft- und/oder formschlüssige Verbindung herzustellen, wobei die Sicherheitsvorrichtung (60) ein Betätigungselement (63) aufweist, welches derart angrenzend zur Ladekomponente (50), insbesondere einer Ladebuchse (51), angeordnet ist, dass vor und/oder bei der Herstellung der Ladeverbindung eine Kraftausübung durch die Ladevorrichtung (310), insbesondere einem Ladestecker (315), auf das Betätigungselement (63) erfolgt, sodass durch das Betätigungselement (63) die Detektion durchführbar ist.

3. Batteriesystem (200) nach Anspruch 1 oder 2,
**dadurch gekennzeichnet,**
**dass** das mechanische Betätigungselement (63) der Sicherheitsvorrichtung (60) unmittelbar oder benachbart an einem Gehäuse (52) der Ladekomponente (50) angeordnet ist, nämlich in dem Verbindungsbereich (V), in welchem die Ladevorrichtung (310), nämlich ein Ladestecker (315), zur Ladeverbindung mit der Ladekomponente (50), nämlich einer Ladebuchse (51), durch eine Kontaktierungsbewegung (B) einbringbar ist, sodass das Betätigungselement (63) durch die Kontaktierungsbewegung (B) der Ladevorrichtung (310) betätigbar, nämlich bewegbar, ausgeführt ist.

4. Batteriesystem (200) nach einem der vorhergehenden Ansprüche,
**dadurch gekennzeichnet,**
**dass** ein elektrisches Schaltmittel (62) der Sicherheitsvorrichtung (60) vorgesehen ist, und in einen elektrischen Sicherheitspfad (65) des Batteriesystems (200) integriert ist, vorzugsweise über den Sicherheitspfad (65) mit einem Batteriemanagementsystem (400) verbindbar ist, um zur Detektion der mechanischen Ladeverbindung den Sicherheitspfad (65) zu unterbrechen.

5. Batteriesystem (200) nach Anspruch 4,
**dadurch gekennzeichnet,**
**dass**
- in einem Normalzustand das Schaltmittel (62) den Sicherheitspfad (65) schließt, sodass ein Stromfluss durch den Sicherheitspfad (65) erfolgt, um eine mechanisch mit der Ladevorrichtung (310) unverbundene Ladekomponente (50) zu detektieren, und
- im Ladezustand das Schaltmittel (62) den Sicherheitspfad (65) öffnet, sodass der Stromfluss vollständig oder im Wesentlichen verhindert ist, um eine mechanisch mit der Ladevorrichtung (310) verbundene Ladekomponente (50) zu detektieren.

6. Batteriesystem (200) nach einem der vorhergehenden Ansprüche,
**dadurch gekennzeichnet,**
**dass** ein Betätigungselement (63), insbesondere eine mechanische Wippe, benachbart zu einem Schaltmittel (62) angeordnet ist, und vorzugsweise beweglich an einem Gehäuse (61) der Sicherheitsvorrichtung (60) und/oder an einem Gehäuse (52) der Ladekomponente (50) gelagert ist, um bei einer Kraftausübung auf das Betätigungselement (63) das Schaltmittel (62) durch eine zumindest teilweise lineare oder Dreh- oder Kipp- oder Schwenkbewegung des Betätigungselements (63) zu betätigen.

7. Batteriesystem (200) nach einem der vorhergehenden Ansprüche,
**dadurch gekennzeichnet,**
**dass** wenigstens ein elektronisches Schaltelement (20) zur Herstellung einer elektrischen Verbindung der Batterie (210) mit der Fahrzeugkomponente (2) vorgesehen ist, und ein Steuerungspfad (S), insbesondere eines Batteriemanagementsystems (400), elektrisch mit dem elektronischen Schaltelement (20) verbunden ist, sodass bei der Detektion der mechanischen Ladeverbindung das elektronische Schaltelement (20) über den Steuerungspfad (S) in einen ausgeschalteten Schaltzustand bringbar ist, um die elektrische Verbindung der Batterie (210) mit der Fahrzeugkomponente (2) zu unterbrechen.

8. Batteriesystem (200) nach einem der vorhergehenden Ansprüche,
**dadurch gekennzeichnet,**
**dass** ein Batteriemanagementsystem (400) vorgesehen ist, welches elektrisch mit wenigstens einem Schaltelement (20) über jeweilige Steuerungspfade (S) verbunden ist, sodass in Abhängigkeit von der Detektion der mechanischen Ladeverbindung:
- für einen Aufladevorgang bei positiver Detektion ein erstes elektronisches Schaltelement (21) in einen eingeschalteten ersten Schaltzustand und ein zweites elektronisches Schaltelement (22) in einen ausgeschalteten zweiten Schaltzustand bringbar ist, und
- für eine bereitgestellte Energieversorgung zur Fahrzeugkomponente (2) bei negativer Detektion das erste elektronische Schaltelement (21) in einen eingeschalteten ersten Schaltzustand und das zweite elektronische Schaltelement (22) in einen eingeschalteten zweiten Schaltzustand bringbar ist.

9. Batteriesystem (200) nach einem der vorhergehenden Ansprüche,
**dadurch gekennzeichnet,**
**dass** die Fahrzeugkomponente (2) als elektrische Antriebskomponente, insbesondere als Elektromotor, des Fahrzeuges (1) ausgeführt ist.

10. Ladesystem (300) zur Aufladung wenigstens einer Batterie (210) eines Batteriesystems (200) eines Fahrzeuges (1), vorzugsweise eines Flurförderzeuges, das Ladesystem (300) weiter aufweisend
- das Batteriesystem (200) nach einem der Ansprüche 1 bis 9,
- wenigstens eine separat von dem Batteriesystem (200) ausgeführte Ladevorrichtung (310) zur Energieübertragung an die Batterie (210), wobei die Ladekomponente (50) des Batteriesystems (200) zur lösbaren mechanischen und elektrischen Ladeverbindung mit der Ladevorrichtung (310) eingerichtet ist, um die Energieübertragung zu bewirken.

11. Ladesystem (300) nach Anspruch 10,
**dadurch gekennzeichnet,**
**dass** die Ladevorrichtung (310), vorzugsweise ein Ladestecker (315) der Ladevorrichtung (310), wenigstens eine elektrische Umschaltkomponente (320), insbesondere eine passive und/oder elektromechanische Komponente, aufweist, welche dazu ausgeführt ist, bei elektrischer Kontaktierung mit dem Batteriesystem (200), insbesondere mit einem Anschluss eines Batteriemanagementsystems (400), eine Umschaltung wenigstens eines elektronischen Schaltelements (21,22) in einen ausgeschalteten Schaltzustand zu initiieren, sodass vorzugsweise bei der Kontaktierung des Ladesteckers zur Durchführung der Aufladung die Energieversorgung der Batterie (210) zur Fahrzeugkomponente (2) verhindert ist.

12. Verfahren (100) zur Aufladung bei einem Batteriesystem (200) eines Fahrzeuges (1), vorzugsweise eines Flurförderzeuges, mit wenigstens einer wiederaufladbaren Batterie (210) des Batteriesystems (200) zur Energieversorgung wenigstens einer Fahrzeugkomponente (2) des Fahrzeuges (1), und wenigstens zwei elektronischen Schaltelementen (20) des Batteriesystems (200) jeweils zur Herstellung einer elektrischen Verbindung der Batterie (210) mit der Fahrzeugkomponente (2), **gekennzeichnet durch die nachfolgenden Schritte:**
- Verbinden einer Ladevorrichtung (310) mit einer Ladekomponente (50) des Batteriesystems (200), um eine mechanische und elektrische Ladeverbindung herzustellen,
- Initiieren eines Ausschaltens wenigstens eines der elektronischen Schaltelemente (22) in einen ausgeschalteten Schaltzustand, wenn die mechanische Ladeverbindung detektiert wird, sodass die Energieversorgung der Fahrzeugkomponente (2) überwiegend reduziert und/oder vollständig unterbrochen wird,
- Initiieren eines Aufladevorgangs zur Aufladung der Batterie (210) durch die Ladevorrichtung (310), wobei
ein Batteriesystem (200) nach einem der Ansprüche 1 bis 9 und/oder ein Ladesystem (300) nach einem der Ansprüche 10 bis 11 betrieben wird

13. Verfahren nach Anspruch 12,
**dadurch gekennzeichnet,**
**dass** anhand der Detektion das Batteriesystem (200) von einem Schlafmodus in einen Ladezustand überführt wird, wobei vorzugsweise im Schlafmodus für eine vollständige Unterbrechung zur Fahrzeugkomponente (2) ein erstes elektronisches Schaltelement (21) in einen ausgeschalteten ersten Schaltzustand und ein zweites elektronisches Schaltelement (22) in einen ausgeschalteten zweiten Schaltzustand überführt ist, wobei das Initiieren des Ausschaltens des wenigstens einen der elektronischen Schaltelemente (22) ausgelöst durch das Verbinden der Ladevorrichtung (310) erfolgt, automatisch durch eine Herstellung eines elektrischen Kontakts beim Verbinden durch wenigstens eine Umschaltkomponente (320) eines Ladesteckers (315) der Ladevorrichtung (310), wobei beim Kontaktieren des Ladesteckers (315) die Umschaltkomponente (320) wenigstens ein elektrisches Signal erzeugt wird, welches ein Umschalten des zweiten elektronischen Schaltelements (22) in den ausgeschalteten zweiten Schaltzustand bewirkt, und damit ein Sperren des Stromflusses in zumindest eine Stromrichtung durch das zweite elektronische Schaltelement (22), sodass die Fahrzeugkomponente (2) nicht mehr durch die Batterie (210) ausreichend mit Energie versorgt wird, um ein Losfahren zu verhindern.

14. Fahrzeug (1), vorzugsweise ein Flurförderzeug, aufweisend:
- ein Batteriesystem (200) nach einem der Ansprüche 1 bis 9
- eine Fahrzeugkomponente, vorzugsweise zur Durchführung eines Verfahrens nach einem der Ansprüche 12 bis 13.

## Claims

1. Battery system (200) for a vehicle (1), preferably for an industrial truck, comprising:
- at least one rechargeable battery (210) for supplying energy to at least one vehicle component (2) of the vehicle (1),
- a charging component (50) for mechanical (52) and electrical (53) charging connection with an external charging device (310) to charge, in a charging state, the battery (210) by the charging device (310),
- a safety device (60), which is arranged at least partially in the region of the charging component (50), for detecting the mechanical charging connection of the charging component (50) to the charging device (310), so that a safety interruption of the power supply to the vehicle component (2) in the charging state can be implemented,
**characterized in that**
a mechanical actuating element (63) of the safety device (60) is arranged directly or adjacent to a housing (52) of the charging component (50), namely in a connecting region (V), in which the charging device (310) can be introduced for charging connection with the charging component (50) by a contacting movement (B), so that the actuating element (63) is designed to be actuable by the contacting movement (B) of the charging device (310), and wherein the mechanical actuating element (63) is arranged in the connecting region (V) of the charging component (50) in such a way that a force is exerted by the charging device (310) in the course of establishing the mechanical charging connection in time before at least one electrical contact (320) of the charging device (310) makes contact with a respective mating contact (53) of the charging component (50).

2. Battery system (200) according to claim 1,
**characterized in that**
the charging component (50) is designed to be complementary to the charging device (310) in order to produce the mechanical charging connection as a releasable nonpositive and/or positive connection, the safety device (60) having an actuating element (63) which is arranged adjacent to the charging component (50), in particular a charging socket (51), in such a way that, before and/or during the establishment of the charging connection, a force is exerted on the actuating element (63) by the charging device (310), in particular a charging plug (315), so that the detection can be carried out by the actuating element (63).

3. Battery system (200) according to claim 1 or 2,
**characterized in that**
the mechanical actuating element (63) of the safety device (60) is arranged directly or adjacent to a housing (52) of the charging component (50), namely in the connecting region (V) in which the charging device (310), namely a charging plug (315), for charging connection with the charging component (50), namely a charging socket (51), is insertable by a contacting movement (B), so that the actuating element (63) is designed to be actuable, namely movable, by the contacting movement (B) of the charging device (310).

4. Battery system (200) according to any one of the preceding claims,
**characterized in that**
an electrical switching means (62) of the safety device (60) is provided and integrated in an electrical safety path (65) of the battery system (200), preferably connectable to a battery management system (400) via the safety path (65), in order to interrupt the safety path (65) for detecting the mechanical charging connection.

5. Battery system (200) according to claim 4,
**characterized in that,**
- in a normal state, the switching means (62) closes the safety path (65) so that current flows through the safety path (65) to detect a charging component (50) mechanically unconnected to the charging device (310), and
- in the charging state, the switching means (62) opens the safety path (65) so that current flow is completely or substantially prevented to detect a charging component (50) mechanically connected to the charging device (310).

6. Battery system (200) according to any one of the preceding claims,
**characterized in that,**
an actuating element (63), in particular a mechanical rocker, is arranged adjacent to a switching means (62) and is preferably mounted movably on a housing (61) of the safety device (60) and/or on a housing (52) of the charging component (50) in order, when force is exerted on the actuating element (63), to actuate the switching means (62) by means of an at least partially linear or rotary or tilting or pivoting movement of the actuating element (63).

7. Battery system (200) according to any one of the preceding claims,
**characterized in that,**
at least one electronic switching element (20) is provided for establishing an electrical connection of the battery (210) to the vehicle component (2), and
a control path (S), in particular of a battery management system (400), is electrically connected to the electronic switching element (20), so that, when the mechanical charging connection is detected, the electronic switching element (20) can be brought into a switched-off switching state via the control path (S) in order to interrupt the electrical connection of the battery (210) to the vehicle component (2).

8. Battery system (200) according to any one of the preceding claims,
**characterized in that,**
a battery management system (400) is provided which is electrically connected to at least one switching element (20) via respective control paths (S) so that, depending on the detection of the mechanical charging connection:
- for a charging process in the case of positive detection, a first electronic switching element (21) can be brought into a switched-on first switching state and a second electronic switching element (22) can be brought into a switched-off second switching state, and
- for a provided power supply to the vehicle component (2) in the event of negative detection, the first electronic switching element (21) can be brought into an activated first switching state and the second electronic switching element (22) can be brought into an activated second switching state.

9. Battery system (200) according to any one of the preceding claims,
**characterized in that,**
the vehicle component (2) is designed as an electric drive component, in particular as an electric motor, of the vehicle (1).

10. Charging system (300) for charging at least one battery (210) of a battery system (200) of a vehicle (1), preferably an industrial truck, the charging system (300) further comprising
- the battery system (200) according to any one of claims 1 to 9,
- at least one charging device (310) separate from the battery system (200) for transferring energy to the battery (210), wherein the charging component (50) of the battery system (200) is adapted for releasable mechanical and electrical charging connection with the charging device (310) to effect the energy transfer.

11. A charging system (300) according to claim 10,
**characterized in that,**
the charging device (310), preferably a charging plug (315) of the charging device (310), has at least one electrical switching component (320), in particular a passive and/or electromechanical component, which is designed to initiate a switchover of at least one electronic switching element (21, 22) to a switched-off switching state when electrical contact is made with the battery system (200), in particular with a connection of a battery management system (400), so that the power supply of the battery (210) to the vehicle component (2) is preferably prevented when the charging plug is contacted in order to carry out charging.

12. Method (100) for charging in a battery system (200) of a vehicle (1), preferably an industrial truck, having at least one rechargeable battery (210) of the battery system (200) for supplying energy to at least one vehicle component (2) of the vehicle (1), and at least two electronic switching elements (20) of the battery system (200) in each case for producing an electrical connection of the battery (210) to the vehicle component (2), **characterized by the following steps:**
- connecting a charging device (310) to a charging component (50) of the battery system (200) to provide a mechanical and electrical charging connection,
- initiating a switch-off of at least one of the electronic switching elements (22) into a switched-off switching state when the mechanical charging connection is detected, so that the power supply of the vehicle component (2) is predominantly reduced and/or completely interrupted,
- initiating a charging process to charge the battery (210) by the charging device (310), wherein
a battery system (200) according to any one of claims 1 to 9 and/or a charging system (300) according to any one of claims 10 to 11 is operated

13. The method of claim 12,
**characterized in that,**
the battery system (200) is transferred from a sleep mode to a charging state on the basis of the detection, preferably a first electronic switching element (21) being transferred to a switched-off first switching state and a second electronic switching element (22) being transferred to a switched-off second switching state in the sleep mode for a complete interruption to the vehicle component (2), the initiation of the switching-off of the at least one of the electronic switching elements (22) being triggered by the connection of the charging device (310), automatically by establishing an electrical contact upon connection by at least one switching component (320) of a charging plug (315) of the charging device (310), wherein upon contacting the charging plug (315) the switching component (320) generates at least one electrical signal which causes a switchover of the second electronic switching element (22) into the switched-off second switching state, and thus a blocking of the current flow in at least one current direction through the second electronic switching element (22), so that the vehicle component (2) is no longer supplied with sufficient energy by the battery (210) to prevent driving off.

14. Vehicle (1), preferably an industrial truck, comprising:
- a battery system (200) according to any one of claims 1 to 9.
- A vehicle component, preferably for carrying out a method according to any one of claims 12 to 13.

## Revendications

1. Système de batterie (200) pour un véhicule (1), de préférence pour un chariot de manutention, présentant :
- au moins une batterie rechargeable (210) pour l'alimentation en énergie d'au moins un composant (2) du véhicule (1),
- un composant de charge (50) pour une connexion de charge mécanique (52) et électrique (53) avec un dispositif de charge externe (310) pour charger la batterie (210) dans un état de charge par le dispositif de charge (310),
- un dispositif de sécurité (60), qui est disposé au moins partiellement dans la zone du composant de charge (50), pour détecter la liaison de charge mécanique du composant de charge (50) avec le dispositif de charge (310), de sorte qu'une interruption de sécurité de l'alimentation en énergie du composant de véhicule (2) peut être exécutée dans l'état de charge,
**caractérisé en ce qu'**
un élément d'actionnement mécanique (63) du dispositif de sécurité (60) est disposé directement ou à proximité d'un boîtier (52) du composant de charge (50), à savoir dans une zone de liaison (V) dans laquelle le dispositif de charge (310) peut être introduit pour la liaison de charge avec le composant de charge (50) par un mouvement de mise en contact (B), de sorte que l'élément d'actionnement (63) est réalisé de manière à pouvoir être actionné par le mouvement de mise en contact (B) du dispositif de charge (310), et l'élément d'actionnement mécanique (63) étant disposé dans la zone de liaison (V) du composant de charge (50) de telle sorte qu'un exercice de force par le dispositif de charge (310) au cours d'un établissement de la liaison de charge mécanique s'effectue temporellement avant une mise en contact d'au moins un contact électrique (320) du dispositif de charge (310) avec un contact opposé respectif (53) du composant de charge (50).

2. Système de batterie (200) selon la revendication 1,
**caractérisé en ce que**
le composant de charge (50) est réalisé de manière complémentaire au dispositif de charge (310), afin d'établir la liaison de charge mécanique sous la forme d'une liaison détachable par adhérence et/ou par engagement positif, le dispositif de sécurité (60) présentant un élément d'actionnement (63) qui est adjacent au composant de charge (50) de telle manière, en particulier une douille de charge (51), qu'avant et/ou lors de l'établissement de la liaison de charge, une force est exercée par le dispositif de charge (310), en particulier une fiche de charge (315), sur l'élément d'actionnement (63), de sorte que la détection peut être effectuée par l'élément d'actionnement (63).

3. Système de batterie (200) selon la revendication 1 ou 2,
**caractérisé en ce que**
l'élément d'actionnement mécanique (63) du dispositif de sécurité (60) est disposé directement ou à proximité d'un boîtier (52) du composant de charge (50), à savoir dans la zone de liaison (V) dans laquelle le dispositif de charge (310), à savoir une prise de charge (315), pour la connexion de charge avec le composant de charge (50), à savoir une douille de charge (51), peut être introduite par un mouvement de mise en contact (B), de sorte que l'élément d'actionnement (63) est réalisé de manière à pouvoir être actionné, à savoir déplacé, par le mouvement de mise en contact (B) du dispositif de charge (310).

4. Système de batterie (200) selon l'une quelconque des revendications précédentes, **caractérisé en ce que**
un moyen de commutation électrique (62) du dispositif de sécurité (60) est prévu, qui est intégré dans un chemin de sécurité électrique (65) du système de batterie (200), de préférence peut être relié par le chemin de sécurité (65) à un système de gestion de batterie (400), afin d'interrompre le chemin de sécurité (65) pour la détection de la connexion de charge mécanique.

5. Système de batterie (200) selon la revendication 4,
**caractérisé en ce que**
- dans un état normal, le moyen de commutation (62) ferme le chemin de sécurité (65) de sorte qu'un courant circule à travers le chemin de sécurité (65) pour détecter un composant de charge (50) non connecté mécaniquement au dispositif de charge (310), et
- dans l'état de charge, le moyen de commutation (62) ouvre le chemin de sécurité (65) de sorte que le flux de courant est complètement ou sensiblement empêché afin de détecter un composant de charge (50) connecté mécaniquement au dispositif de charge (310).

6. Système de batterie (200) selon l'une quelconque des revendications précédentes,
**caractérisé en ce que**
un élément d'actionnement (63), en particulier une bascule mécanique, est disposé au voisinage d'un moyen de commutation (62), et est monté de préférence de manière mobile sur un boîtier (61) du dispositif de sécurité (60) et/ou sur un boîtier (52) du composant de charge (50), afin d'actionner le moyen de commutation (62) par un mouvement au moins partiellement linéaire ou de rotation ou de basculement ou de pivotement de l'élément d'actionnement (63) lorsqu'une force est exercée sur l'élément d'actionnement (63).

7. Système de batterie (200) selon l'une quelconque des revendications précédentes,
**caractérisé en ce que**
au moins un élément de commutation électronique (20) est prévu pour établir une liaison électrique de la batterie (210) avec le composant de véhicule (2), et
un chemin de commande (S), en particulier d'un système de gestion de batterie (400), est relié électriquement à l'élément de commutation électronique (20), de sorte que lors de la détection de la connexion de charge mécanique, l'élément de commutation électronique (20) peut être amené dans un état de commutation désactivé par le biais du chemin de commande (S), afin d'interrompre la connexion électrique de la batterie (210) avec le composant de véhicule (2).

8. Système de batterie (200) selon l'une quelconque des revendications précédentes,
**caractérisé en ce que**
un système de gestion de batterie (400) est prévu qui est relié électriquement à au moins un élément de commutation (20) par des chemins de commande respectives (S), de sorte qu'en fonction de la détection de la liaison de charge mécanique :
- pour une opération de charge, en cas de détection positive, un premier élément de commutation électronique (21) peut être amené dans un premier état de commutation activé et un deuxième élément de commutation électronique (22) peut être amené dans un deuxième état de commutation désactivé, et
- pour une alimentation en énergie fournie au composant de véhicule (2), en cas de détection négative, le premier élément de commutation électronique (21) peut être amené dans un premier état de commutation activé et le deuxième élément de commutation électronique (22) peut être amené dans un deuxième état de commutation activé.

9. Système de batterie (200) selon l'une quelconque des revendications précédentes,
**caractérisé en ce que**
le composant de véhicule (2) est réalisé comme composant d'entraînement électrique, en particulier comme moteur électrique, du véhicule (1).

10. Système de charge (300) pour charger au moins une batterie (210) d'un système de batterie (200) d'un véhicule (1), de préférence un chariot de manutention, le système de charge (300) présentant en outre
- le système de batterie (200) selon l'une quelconque des revendications 1 à 9,
- au moins un dispositif de charge (310) réalisé séparément du système de batterie (200) pour transférer de l'énergie à la batterie (210), dans lequel le composant de charge (50) du système de batterie (200) est adapté pour une connexion de charge mécanique et électrique amovible avec le dispositif de charge (310) afin d'effectuer le transfert d'énergie.

11. Système de chargement (300) selon la revendication 10,
**caractérisé en ce que**
le dispositif de charge (310), de préférence une fiche de charge (315) du dispositif de charge (310), présente au moins un composant de commutation électrique (320), en particulier un composant passif et/ou électromécanique, qui est conçu pour, lors de la mise en contact électrique avec le système de batterie (200), en particulier avec une connexion d'un système de gestion de batterie (400), d'initier une commutation d'au moins un élément de commutation électronique (21, 22) dans un état de commutation désactivé, de sorte que, de préférence, lors de la mise en contact de la fiche de charge pour effectuer la charge, l'alimentation en énergie de la batterie (210) vers le composant de véhicule (2) est empêchée.

12. Procédé (100) de charge dans un système de batterie (200) d'un véhicule (1), de préférence un chariot de manutention, avec au moins une batterie rechargeable (210) du système de batterie (200) pour l'alimentation en énergie d'au moins un composant de véhicule (2) du véhicule (1), et au moins deux éléments de commutation électroniques (20) du système de batterie (200) respectivement pour établir une liaison électrique de la batterie (210) avec le composant de véhicule (2),
**caractérisé par les étapes suivantes** :
- Connecter un dispositif de charge (310) à un composant de charge (50) du système de batterie (200) afin d'établir une connexion de charge mécanique et électrique,
- L'initiation d'une désactivation d'au moins un des éléments de commutation électroniques (22) dans un état de commutation désactivé lorsque la connexion de charge mécanique est détectée, de sorte que l'alimentation en énergie du composant de véhicule (2) est principalement réduite et/ou complètement interrompue,
- Le lancement d'une opération de charge pour charger la batterie (210) par le dispositif de charge (310), dans lequel
on fait fonctionner un système de batterie (200) selon l'une des revendications 1 à 9 et/ou un système de charge (300) selon l'une des revendications 10 à 11

13. Procédé selon la revendication 12,
**caractérisé en ce que**
à l'aide de la détection, le système de batterie (200) est transféré d'un mode de sommeil à un état de charge, un premier élément de commutation électronique (21) étant de préférence transféré dans un premier état de commutation désactivé et un deuxième élément de commutation électronique (22) étant transféré dans un deuxième état de commutation désactivé dans le mode de sommeil pour une interruption complète vers le composant de véhicule (2), l'initiation de la désactivation d'au moins un des éléments de commutation électroniques (22) étant déclenchée par la connexion du dispositif de charge (310), automatiquement par un établissement d'un contact électrique lors de la connexion par au moins un composant de commutation (320) d'un connecteur de charge (315) du dispositif de charge (310), au moins un signal électrique étant généré lors de la mise en contact du connecteur de charge (315) avec le composant de commutation (320), qui provoque une commutation du deuxième élément de commutation électronique (22) dans le deuxième état de commutation désactivé, et donc un blocage du flux de courant dans au moins une direction de courant par le deuxième élément de commutation électronique (22), de sorte que le composant de véhicule (2) n'est plus suffisamment alimenté en énergie par la batterie (210) pour empêcher un démarrage.

14. Véhicule (1), de préférence un chariot de manutention, comprenant :
- un système de batterie (200) selon l'une des revendications 1 à 9
- un composant de véhicule, de préférence pour la mise en oeuvre d'un procédé selon l'une des revendications 12 à 13.
